Europäisches Patentamt

European Patent Office

Office européen des brevets

(19)

(11) **EP 1 108 360 A1**

(12) **EUROPEAN PATENT APPLICATION**

(43) Date of publication:
**20.06.2001 Bulletin 2001/25**

(51) Int Cl.[7]: **A21D 8/04**

(21) Application number: **00310712.5**

(22) Date of filing: **01.12.2000**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **DANISCO A/S**<br>**1001 Copenhagen K. (DK)** |
| | (72) Inventor: **Soee, Joeergen Borch**<br>**8381 Mundelstrup (DK)** |
| (30) Priority: **03.12.1999 DK 173699**<br>**16.03.2000 US 189780 P**<br>**24.11.2000 GB 0028701** | (74) Representative: **Harding, Charles Thomas et al**<br>**D. Young & Co.**<br>**21 New Fetter Lane**<br>**London EC4A 1DA (GB)** |

(54) **Method of improving dough and bread quality**

(57)     Method of preparing a dough, the method comprising adding to the dough an enzyme that is capable of simultaneously hydrolysing a nonpolar lipid, a glycolipid and a phospholipid. One or more substrates for the enzyme may be added, e.g. galactolipids such as digalactodiglyceride (DGDG) or phospholipids, e.g. phosphatidyl choline (PC). The lipid substrates can be added to the dough in the form of cereal lipids such as oat oil. The method provides doughs with improved extensibility and reduced stickiness, and baked bread products with high specific volume, improved softness and excellent crumb structure

Fig. 1

EP 1 108 360 A1

**Description**

**FIELD OF THE INVENTION**

The present invention relates to the field of manufacturing flour doughs and flour dough based products and in particular to improving the strength and machinability of doughs and the volume and crumb structure of bread and other baked products. Specifically, the invention provides a method for making doughs and bread using enzymes that are capable of hydrolysing both nonpolar and polar lipids present in the dough whereby the quality of the dough and the finished baked products is improved.

**TECHNICAL BACKGROUND AND PRIOR ART**

Within the baking industry it is well known to use enzymes, such as amylases, xylanases, oxidases and proteases, for the improvement of the dough and the handling properties of doughs and/or improvement of the baked product to obtain increased volume, retarded staling and enhanced softness.

The use of lipases as baking additives is also known. Lipases (EC 3.1.1.3), which can be defined as carboxylesterases catalysing the hydrolysis of acylglycerols, are physiologically very important enzymes as one of the three major digestive enzymes together with amylases and proteases. They hydrolyse acylglycerol lipids to glycerol and fatty acids, but can also function in esterification or transesterification reactions.

Thus, US 3,368,903 discloses purified lipase preparations isolated from plant seeds which, when added to a bread dough mixture, has a significant retarding effect on bread staling.

JP-62-285749-A describes a method of bread making in which lipase is added to the dough in admixture with vital gluten and lecithin. However, it is stated that this lipase deteriorates quality properties such as the bread volume and the elasticity of the crumb.

Mohsen et al. (Egypt. J. Food Sci., 1986, 14:175-182) describes that a lipase produced by *Rhizopus delemar* may improve the softness of bread.

A bread improving composition comprising glucose oxidase in combination with oxidases or hydrolases such as for example lipase is disclosed in EP 468 731 A1. There is obtained bread of a sufficient volume. However, according to this prior art document the use of lipase alone did not result in bread of a satisfactory quality.

WO-94/04035 discloses a method of improving the properties of a dough (with and without added fat) and/ or a baked product made from the dough by adding a lipase (EC 3.1.1.3) of microbial origin to the dough. The use of the microbial lipase resulted in an increased volume and improved softness of the baked product. Furthermore, an antistaling effect was found.

EP 585 988 A1 discloses a bread improver composition comprising at least one lipase, at least one hemicellulase and at least one amylase. Baking experiments showed that the use of lipase alone in a dough without added fat resulted in a reduced volume of the baked product whereas no volume effect was observed when lipase was used in a dough containing added fat.

W098/45453 discloses the use of a lipase form *Aspergillus niger* for improvement of breadcrumb structure. However, this enzyme did not have significant improving effects on bread volume and softness.

From the prior art it can thus be derived that the effects of lipases when used as dough additives are highly variable in respect of antistaling or crumb firmness retardation and improvement of bread volume.

A significant effect of the lipase disclosed in W098/45453 is that it, in addition to its triglyceride hydrolysing effect, is capable of hydrolysing polar glycolipids present in flour, such as e.g. digalatosyldiglyceride (DGDG). It was hypothesised that the bread crumb structure improving effect might be associated with this latter effect. It was also shown that the *Aspergillus niger* lipase did not have a phospholipid hydrolysing effect.

It is known to use phospholipases for improvement of bread quality. Thus, JP-82-66213 discloses the use of phospholipase C and a lysophospholipase for improvement of frozen doughs, EP 575 133 A discloses the use of phospholipase A1 to improve handling properties of doughs, JP-60-078529 describes the use of a phospholipase A to improve the mechanical properties of wheat flour doughs and noodles and EP 109 244 A discloses that phospholipase A can be used to improve the properties of doughs.

Whereas the addition of lipases or phospholipases to flour doughs to improve the mechanical properties of the doughs and/or the quality of the finished baked products is known in the art, it is a significant problem that the amount of lipid substrates for the respective enzymes present in flour is limited. The substrate for lipases in a wheat flour dough is the endogenous lipids of which about 50% are nonpolar lipids and 50% are polar glycolipids and phospholipids.

Several of the lipases presently used in the baking industry including those disclosed in EP 585 998 and WO 94/04035 are only active against the nonpolar lipid fraction resulting in the formation of free fatty acids and glycerol and to a less extent, mono- or diglycerides. The beneficial effects on dough or bread quality is, however, rather limited as free fatty acids may have an adverse effect on bread quality. The fungal lipase disclosed in WO98/45453 has, in addition to its effect on acylglycerols, a certain hydrolysing effect on the polar glycolipids.

Additionally, as it is mentioned above, the use of phospholipases A and C has been suggested as dough and/ or bread improving additives. The enzymatic effect of such phospholipases is that the phospholipids present in the dough is converted into the corresponding lysophospholipids which are known to be effective emulsifying agents. However, the amount of endogenous phospholipids in bread doughs is relatively small and therefore the dough and bread improving effect of adding enzymes that are selectively active against phospholipids will be limited.

There is therefore a need for a dough and/or bread improving enzyme that is capable of hydrolysing substantially all of the lipid types present in flour doughs, i.e. the nonpolar acylglycerols and the polar phospholipids and glycolipids. The present invention is based on the discovery of lipolytically active enzymes that are capable of utilising all of these lipids simultaneously as substrates and it has been found that the addition of such an enzyme to a dough results in significant improvements of dough stability and strength and the handling properties of doughs and in improved quality of the baked bread products in terms of a significant enhancement of bread volume, crumb structure, crumb appearance, and colour and of the softness of the bread. A particularly interesting and important aspect of these novel enzymes is that they may have preference for polar lipids implying that the adverse effects that have been observed for acylglycerol hydrolysing lipases can be controlled by selecting enzymes preferentially hydrolysing polar lipids. A further interesting and important aspect of these novel enzymes is that they may have preference for long chain fatty acids, such as $C_{12}$ to $C_{20}$ fatty acids, as compared with short chain fatty acids, such as $C_4$ to $C_{10}$ fatty acids.

Chain-length selectivity has been shown in the prior art to be affected by amino acid substitutions in a lipase from *Rhizopus delemar.* R.D. Joerger *et al* (Lipids, 29 (6) 377-384 (1994)) indicates that variants F95D, F112W and V209W have an altered preference to $C_4$ and $C_8$ acids. R.R. Klein *et al* (JAOCS, 74 (11) 1401-1407 (1997)) discloses that the variant V206T+F95D has a higher selectivity for $C_8$ fatty acids. R.R. Klein *et al* (Lipids 32 (2) 123-130 (1997)) show that the variants V209W+F112W, V94W and F95D+F214R have a higher hydrolytic activity towards $C_4$ to $C_8$ fatty acids, and suggest that structural determinants for medium-chain length specificity may reside in the distal end of the acyl binding groove.

It has also been found that the dough and bread improving effects of the enzymes according to the invention can be further enhanced by adding glycolipids and/or phospholipids to the dough, e.g. in the form of cereal lipids including oat oil.

## SUMMARY OF THE INVENTION

Accordingly, the invention pertains in a first aspect to a method of preparing a flour dough, said method comprising adding to the dough components an enzyme that, under dough conditions, is capable of hydrolysing a nonpolar lipid, a glycolipid and a phospholipid, or a composition containing said enzyme, and mixing the dough components to obtain the dough. Any of the lipid substrates for the enzyme can be lipids naturally present in the flour or they may be added to the dough.

In a further aspect, there is provided a dough improving composition comprising an enzyme that, under dough conditions, is capable of hydrolysing a nonpolar lipid, a glycolipid and a phospholipid, and optionally at least one further dough component. The further dough component may e.g. be any other enzyme that has an improving effect on the dough properties and/or the quality of a baked product made from the dough.

In a yet further aspect, the invention relates to a dough that is obtained by the method of the invention and baked products that is obtained by baking such a dough, and noodle and pasta products prepared in accordance with the invention.

## DETAILED DISCLOSURE OF INVENTION

The present invention advantageously provides a method to improve the properties of flour based doughs and products made from such doughs. This is, in respect of baked products, achieved by providing a method for preparing baked products which have highly desirable characteristics with respect to bread volume, crumb structure and appearance and which additionally have an extended shelf life as reflected in an enhanced softness, i.e. the staling of the baked products is retarded relative to a baked product made without use of the enzyme of the invention. Although it is presently preferred to use the method for the manufacturing of yeast leavened bread products such as bread loaves, rolls or toast bread, the use of the method for any other types of doughs and dough based products such as noodle and pasta products and cakes, the quality of which can be improved by the addition of the enzymes of the invention, is also contemplated.

The present method comprises as an essential step that an effective amount of an enzyme that, under dough conditions, is capable of hydrolysing a nonpolar lipid, a glycolipid and a phospholipid, or a composition containing said enzyme is added to the dough either directly to an already mixed dough or as a component of one or more dough components.

In the present context, the expression "an effective amount" is used generally to describe an amount of the enzyme which is sufficient to effect, under dough conditions, detectable hydrolysis of triglycerides, phospholipids and glycolipids present in the dough. Examples of analytical methods permitting detection of these hydrolytic activities are given in the below examples. More specifically, the expression may relate to an amount which does not only result in detectable hydrolysis of the above lipid substrates, but which in addition results in the formation of enzymatic end products at a level which results in improved properties of the dough such as a significantly improved stickiness score and/or extensibility score which can be ascribed to the addition of the enzyme, or, if the dough is baked, in an improved quality of the baked product such as enhanced bread volume, enhanced softness or improved crumb structure.

The enzyme of the present invention may possess some triglyceride hydrolysing effect. The enzyme may, besides the triglyceride hydrolysing activity, also have hydrolysing activity on phospholipids and glycolipids.

Alternatively, the enzyme of the invention may have significant hydrolytic activity on phospholipids and glycolipids, but a less significant triglyceride hydrolysing effect.

The enzyme of the invention can be described as a multifunctional enzyme that is capable of simultaneously hydrolysing acylglycerols (glycerides) (i.e. it has an esterase activity generally associated with the class of enzymes referred to as lipases (EC 3.1.1.3)), phospholipids and glycolipids such as galactolipids. Accordingly, the enzyme has a hydrolysing activity that is associated with a variety of enzymes generally referred to as phospholipases. Phospholipids are cleaved in two different ways by two groups of enzymes, one of which is included in the group of lipases and which include phospholipase $A_1$ and phospholipase $A_2$, and phosphodiesterases (phospholipases C and D). The enzyme of the invention may have any of these phospholipase activities.

It has been found that enzymes having the hydrolytic characteristics of the enzyme according to the invention may have different affinities for fatty acid moieties in the lipid substrate implying that the enzyme of the invention may preferentially hydrolyse lipids containing short chain fatty acids such as $C_4$ to $C_{10}$ fatty acids or it may preferentially hydrolyse lipids having long chain fatty groups such as $C_{12}$ to $C_{20}$ fatty acids. Enzymes having preference for long chain fatty acid groups may e.g. be particularly useful in doughs where butter fat or other lipids containing butyric acid groups, as it is a known problem that free butyric acid may give rise to undesirable taste and flavour.

In a much preferred aspect, the enzyme of the invention preferentially hydrolyses lipids containing long chain fatty acids, such as $C_{12}$ to $C_{20}$ fatty acids, as compared with short chain fatty acids such as $C_4$ to $C_{10}$ fatty acids. That is to say, the enzyme preferably has a relatively low activity on short chain fatty acids but is particularly active towards glycerides with long chain fatty acids.

Much by preference, the enzyme of the present invention is not active on short chain fatty acids.

The use of an enzyme with relatively low activity on short chain fatty acids may avoid or suppress the development of an undesirable flavour, which undesirable flavour may develop due to the release of short-chain fatty acids.

One implication of this selective substrate profile is that an enzyme can be selected which is particularly active in a given dough depending on the recipe and the lipid content thereof.

The enzyme having the properties as defined herein may be derived from a variety of sources including plants, animals and microorganisms such as bacterial and fungal species including yeast species. The enzyme of the invention may be derived from an organism that naturally produces the enzyme or it may be produced recombinantly by transforming an appropriate host cell with a gene coding for the enzyme. The enzyme can be an enzyme that comprises in itself active sites for all of its enzyme activities, but it is also possible to construct hybrid enzymes having the enzyme activities as defined herein by synthesis or by using recombinant DNA technology.

Alternatively, an enzyme which does not, initially at least, have the specific properties as defined herein can be modified, for example by altering the amino acid sequence thereof, in order to provide an enzyme having the properties as defined herein and having the desired substrate specificity. It is known in the art to modify enzymes by random mutagenesis (US 4,814,331, WO 93/01285 and WO 95/22615) and to modify lipolytic enzymes by site-specific mutagenesis (WO 97/04079) to obtain improved performance thereof. The generally used concept has been to insert, delete or substitute amino acids within the structural part of the amino acid chain of a lipolytic enzyme in question. A suitable enzyme for modification is one that can hydrolyse ester bonds. Such enzymes include, for example, lipases, such as triacylglycerol lipase (EC 3.1.1.3), lipoprotein lipase (EC 3.1.1.34), monoglyceride lipase (EC 3.1.1.23), lysophospholipase, ferulic acid esterase and esterase (EC 3.1.1.1, EC 3.1.1.2).

Suitable enzymes for modification may be derived from a variety of sources including plants, animals and microorganisms, such as bacterial and fungal species including yeast species. Examples of suitable enzymes for modification are the *Pseudomonas* lipases, for example from *P. cepacia* (US 5,290,694), *P. glumae* (Frenken N *et al* (1992) Appl. Envir. Microbiol. 58 3787-3791), *P. pseudoalcaligenes* (EP 0 334 462) or *Pseudomonas sp.* Strain SD 705 (W095/06720, EP 0 721 981, WO 96/27002, EP 0 812 910). Alternatively, suitable enzymes for modification may be for example fungal lipolytic enzymes, such as lipolytic enzymes of the *Humicola* family and the *Zygomycetes* family and fungal cutinases. The *Humicola* family of lipolytic enzymes consists of the lipase from *H. lanuginosa* strain DSM 4109 and lipases having more than 50% homology with this lipase. The lipase from *H. lanuginosa* (synonym *Thermo-*

*myces lanuginosus)* is described in EP 0 258 068 and EP 0 305 216, and has the amino acid sequence shown in positions 1-269 of SEQ ID NO.2 of US 5,869,438.

Presently preferred enzymes for use in the invention are Lipase SP 972 and Lipase SP 979, the effect of which are described in detail in the examples below.

Most cereal flours contain nonpolar lipids including triglycerides and polar lipids including phospholipids and glycolipids which can serve as substrates for the enzyme of the invention. Accordingly, in one embodiment of the method, at least one of the nonpolar lipid, the glycolipid such as a galactolipid including digalactosyldiglyceride (DGDG), and the phospholipid such as phosphatidylcholine (PC) is a naturally occurring (or endogenous) lipid component occurring in the flour used for the dough.

However, a flour dough may not contain sufficient amounts of all of the lipid substrates for the enzyme of the invention. It is therefore within the scope of the invention to supplement the dough with at least one of a nonpolar lipid, a glycolipid and a phospholipid to provide sufficient substrates for the enzyme. It will be appreciated that the expression "sufficient substrate" implies that none of the three main types of lipid substrates is limiting for obtaining a dough improving or baked product improving effect as described above.

The supplementary lipid substrate for the enzyme of the invention may be a nonpolar lipid such as an acylglycerol. In accordance with the invention a variety of such lipids can be used such as e.g. vegetable oils, vegetable fats, animal oils, animal fats such as e.g. butterfat, and shortening. In this connection, a particularly useful lipid is an oil or a fat derived from cereals such as oat oil. Oat oil typically contains, in addition to triglycerides, 5-25% phospholipids and 5-12% glycolipids. Oat oil can be fractionated to yield fractions having a high content of polar lipids.

It is thus one aspect of the method of the invention that one or more phospholipids can be added to the dough. In this connection, useful phospholipids include phosphatidylinositol (PI), phosphatidylglycerol (PG), phosphatidylcholine (PC), lecithin and phosphatidylethanolamine (PE).

In accordance with the invention, the enzyme is added in an amount which is in the range of 10 to 100,000 LUT/kg flour or in the range of 10 to 100,000 PLU/kg flour, the unit designations are those defined in the below examples, such as a range of 50 to 50,000 LUT or PLU/kg flour including a range of 100 to 10,000 LUT/kg flour or 100 to 10,000 PLU/kg flour.

The present invention may further advantageously provide a method for obtaining a baked product having improved quality characteristics as defined above. Accordingly, in one embodiment, the dough being prepared by the method of the invention is a bread dough and the method comprises as a further step that the dough is baked to obtain a baked product. One particularly desired property of baked bread products is a high specific volume as defined in the examples. Accordingly, the addition of the enzyme of the invention preferably results in an increase of the specific volume of the baked product that is at least 10%, relative to a baked product made under identical conditions except that the enzyme is not added. More preferably, the increase of the specific volume is at least 20% such as at least 30%, e.g. at least 40%.

The present invention may further provide pasta doughs, noodle doughs and cake doughs or batters and finished products made from such doughs or batters.

It is known in the art that enzymes other than lipases may contribute to improved dough properties and quality of baked products. It is within the scope of the invention that, in addition to the enzyme of the invention, at least one further enzyme is added to the dough. Such further enzymes include starch degrading enzymes such as endo- or exoamylases, pullulanases, debranching enzymes, hemicellulases including xylanases, cellulases and oxidoreductases, e.g. glucose oxidase, lipases, phospholipases and hexose oxidase.

It has been found that the enzyme of the invention may be particularly active against certain glycolipids such as e.g. galactolipids including digalactodiglyceride (DGDG) which is converted into digalactomonoglyceride (DGMG) that is an effective surfactant. In useful embodiments, the enzyme of the invention is therefore an enzyme that is capable of hydrolysing at least 25% of DGDG initially present in the dough and preferably at least 50% of the DGDG is hydrolysed such as at least 60% or at least 75% hereof.

Another useful lipid substrate for the present enzyme is the phospholipid, phosphatidyl choline (PC). Thus, in useful embodiments the enzyme is capable of degrading at least 25%, preferably at least 50% including at least 60% such as at least 75% of the PC initially present in the dough.

It is one advantageous aspect of the present enzymes that they may be more hydrolytically active against certain of the lipid substrate types as defined above than they are against other types. The enzymes may thus be relatively more active against polar lipids than they are against nonpolar triglycerides. This can be illustrated by analysing the amount of any of the lipid substrate types being hydrolysed and then construct a curve describing the relationship between the hydrolysis of any pairs of lipid substrates, e.g. triglycerides vs. glycolipid or triglycerides vs. phospholipids.

In specific embodiments, the enzyme of the invention is characterised in that the relationship between the ability of the enzyme to hydrolyse triglycerides and the ability to hydrolyse glycolipids can be described as a curve having a slope which is at least 1.0, such at least 1.5 or at least 2.0, or in that the relationship between the ability of the enzyme to hydrolyse triglycerides and the ability to hydrolyse phospholipids can be described as a curve having a slope which is at least 0.1, such as e.g. at least 0.2, including at least 0.5 or at least 1.0.

In a further aspect, the invention provides a dough improving composition comprising an enzyme that, under dough conditions, is capable of hydrolysing a nonpolar lipid, a glycolipid and a phospholipid, and optionally at least one further dough component. Such a further dough component can e.g. be a further enzyme as defined above, including lipases or phospholipases not having the substrate profile of the present enzyme. Other suitable dough components which can be incorporated in the composition include cereal flours such as wheat flour, rice flour and corn flour, yeast, chemical leavening agents, dough strengthening agents such as oxidoreductases and ascorbates, emulsifiers, sugars, acylglycerols of the types mentioned above, phospholipids such as soy lecithin and egg lecithin, glycolipids and salts.

In further aspects of the invention there is provided a method of preparing a dough as defined above wherein the enzyme is added in a composition as described above and a dough that is obtained in accordance with the methods of the invention. Such a dough can be a fresh dough, optionally packaged in a controlled atmosphere to keep it fresh or it may be a frozen dough.

Although some enzymes having the specific properties as defined herein can be readily identified by persons skilled in the art, the present invention further provides a method for identifying enzymes capable of hydrolysing a nonpolar lipid, a glycolipid and a phospholipid or for identifying enzymes eligible for development into enzymes capable of hydrolysing a nonpolar lipid, a glycolipid and a phospholipid. One such eligible enzyme for development into an enzyme in accordance with the present invention is the lipase from *Aspergillus niger,* which lipase is disclosed in WO98/45453 (incorporated herein by reference).

The present invention further provides a method for developing enzymes capable of hydrolysing a nonpolar lipid, a glycolipid and a phospholipid.

**Cloning a nucleotide sequence encoding an enzyme**

A nucleotide sequence encoding either an enzyme which has the specific properties as defined herein or an enzyme which is suitable for modification may be isolated from any cell or organism producing said enzyme. Various methods are well known within the art for the isolation of nucleotide sequences.

For example, a genomic DNA and/or cDNA library may be constructed using chromosomal DNA or messenger RNA from the organism producing the enzyme. If the amino acid sequence of the enzyme is known, labelled oligonucleotide probes may be synthesised and used to identify enzyme-encoding clones from the genomic library prepared from the organism. Alternatively, a labelled oligonucleotide probe containing sequences homologous to another known enzyme gene could be used to identify enzyme-encoding clones. In the latter case, hybridisation and washing conditions of lower stringency are used.

Alternatively, enzyme-encoding clones could be identified by inserting fragments of genomic DNA into an expression vector, such as a plasmid, transforming enzyme-negative bacteria with the resulting genomic DNA library, and then plating the transformed bacteria onto agar containing a substrate for enzyme (i.e. maltose), thereby allowing clones expressing the enzyme to be identified.

In a yet further alternative, the nucleotide sequence encoding the enzyme may be prepared synthetically by established standard methods, e.g. the phosphoroamidite method described by Beucage S.L. *et al* (1981) Tetrahedron Letters 22, p 1859-1869, or the method described by Matthes *et al* (1984) EMBO J. 3, p 801-805. In the phosphoroamidite method, oligonucleotides are synthesised, e.g. in an automatic DNA synthesiser, purified, annealed, ligated and cloned in appropriate vectors.

The nucleotide sequence may be of mixed genomic and synthetic origin, mixed synthetic and cDNA origin, or mixed genomic and cDNA origin, prepared by ligating fragments of synthetic, genomic or cDNA origin (as appropriate) in accordance with standard techniques. Each ligated fragment corresponds to various parts of the entire nucleotide sequence. The DNA sequence may also be prepared by polymerase chain reaction (PCR) using specific primers, for instance as described in US 4,683,202 or in Saiki R K *et al* (Science (1988) 239, pp 487-491).

**Nucleotide sequence**

The present invention also encompasses nucleotide sequences encoding enzymes having the specific properties as defined herein. The term "nucleotide sequence" as used herein refers to an oligonucleotide sequence or polynucleotide sequence, and variant, homologues, fragments and derivatives thereof (such as portions thereof). The nucleotide sequence may be of genomic or synthetic or recombinant origin, which may be double-stranded or single-stranded whether representing the sense or antisense strand.

The term "nucleotide sequence" in relation to the present invention includes genomic DNA, cDNA, synthetic DNA, and RNA. Preferably it means DNA, more preferably cDNA for the coding sequence of the present invention.

In a preferred embodiment, the nucleotide sequence *per se* of the present invention does not cover the native nucleotide sequence according to the present invention in its natural environment when it is linked to its naturally associated sequence(s) that is/are also in its/their natural environment. For ease of reference, we shall call this preferred embodiment the "non-native nucleotide sequence". In this regard, the term "native nucleotide sequence" means an entire nucleotide sequence that is in its native environment and when operatively linked to an entire promoter with which it is naturally associated, which promoter is also in its native environment. Thus, the enzyme of the present invention can be expressed by a nucleotide sequence in its native organism but wherein the nucleotide sequence is not under the control of the promoter with which it is naturally associated within that organism.

The enzyme of the present invention may be used in conjunction with other enzymes. Thus the present invention also covers a combination of enzymes wherein the combination comprises the enzyme of the present invention and another enzyme, which may be another enzyme according to the present invention.

Preferably the enzyme is not a native enzyme. In this regard, the term "native enzyme" means an entire enzyme that is in its native environment and when it has been expressed by its native nucleotide sequence.

Typically, the nucleotide sequence of the present invention is prepared using recombinant DNA techniques (i.e. recombinant DNA). However, in an alternative embodiment of the invention, the nucleotide sequence could be synthesised, in whole or in part, using chemical methods well known in the art (see Caruthers MH *et al* (1980) Nuc Acids Res Symp Ser 215-23 and Horn T *et al* (1980) Nuc Acids Res Symp Ser 225-232).

### Amino acid sequences

The present invention also encompasses amino acid sequences of enzymes having the specific properties as defined herein.

As used herein, the term "amino acid sequence" is synonymous with the term "polypeptide" and/or the term "protein". In some instances, the term "amino acid sequence" is synonymous with the term "peptide". In some instances, the term "amino acid sequence" is synonymous with the term "enzyme".

The amino acid sequence may be prepared/isolated from a suitable source, or it may be made synthetically or it may be prepared by use of recombinant DNA techniques.

### Variants/homologues/derivatives

The present invention also encompasses the use of variants, homologues and derivatives of any amino acid sequence of an enzyme of the present invention or of any nucleotide sequence encoding such an enzyme. Here, the term "homologue" means an entity having a certain homology with the subject amino acid sequences and the subject nucleotide sequences. Here, the term "homology" can be equated with "identity".

In the present context, an homologous sequence is taken to include an amino acid sequence which may be at least 75, 85 or 90% identical, preferably at least 95 or 98% identical to the subject sequence. Typically, the homologues will comprise the same active sites etc. as the subject amino acid sequence. Although homology can also be considered in terms of similarity (i.e. amino acid residues having similar chemical properties/functions), in the context of the present invention it is preferred to express homology in terms of sequence identity.

In the present context, an homologous sequence is taken to include a nucleotide sequence which may be at least 75, 85 or 90% identical, preferably at least 95 or 98% identical to a nucleotide sequence encoding an enzyme of the present invention (the subject sequence). Typically, the homologues will comprise the same sequences that code for the active sites etc. as the subject sequence. Although homology can also be considered in terms of similarity (i.e. amino acid residues having similar chemical properties/functions), in the context of the present invention it is preferred to express homology in terms of sequence identity.

Homology comparisons can be conducted by eye, or more usually, with the aid of readily available sequence comparison programs. These commercially available computer programs can calculate % homology between two or more sequences.

% homology may be calculated over contiguous sequences, i.e. one sequence is aligned with the other sequence and each amino acid in one sequence is directly compared with the corresponding amino acid in the other sequence, one residue at a time. This is called an "ungapped" alignment. Typically, such ungapped alignments are performed only over a relatively short number of residues.

Although this is a very simple and consistent method, it fails to take into consideration that, for example, in an otherwise identical pair of sequences, one insertion or deletion will cause the following amino acid residues to be put out of alignment, thus potentially resulting in a large reduction in % homology when a global alignment is performed. Consequently, most sequence comparison methods are designed to produce optimal alignments that take into consideration possible insertions and deletions without penalising unduly the overall homology score. This is achieved by inserting "gaps" in the sequence alignment to try to maximise local homology.

However, these more complex methods assign "gap penalties" to each gap that occurs in the alignment so that, for the same number of identical amino acids, a sequence alignment with as few gaps as possible - reflecting higher relatedness between the two compared sequences - will achieve a higher score than one with many gaps. "Affine gap costs" are typically used that charge a relatively high cost for the existence of a gap and a smaller penalty for each subsequent residue in the gap. This is the most commonly used gap scoring system. High gap penalties will of course produce optimised alignments with fewer gaps. Most alignment programs allow the gap penalties to be modified. However, it is preferred to use the default values when using such software for sequence comparisons. For example when using the GCG Wisconsin Bestfit package the default gap penalty for amino acid sequences is -12 for a gap and -4 for each extension.

Calculation of maximum % homology therefore firstly requires the production of an optimal alignment, taking into consideration gap penalties. A suitable computer program for carrying out such an alignment is the GCG Wisconsin Bestfit package (Devereux *et al* 1984 Nuc. Acids Research 12 p387). Examples of other software than can perform sequence comparisons include, but are not limited to, the BLAST package (see Ausubel *et al* 1999 Short Protocols in Molecular Biology, 4th Ed - Chapter 18), FASTA (Altschul *et* al 1990 J. Mol. Biol. 403-410) and the GENEWORKS suite of comparison tools. Both BLAST and FASTA are available for offline and online searching (see Ausubel *et al* 1999, pages 7-58 to 7-60). However, for some applications, it is preferred to use the GCG Bestfit program. A new tool, called BLAST 2 Sequences is also available for comparing protein and nucleotide sequence (see FEMS Microbiol Lett 1999 174(2): 247-50; FEMS Microbiol Lett 1999 177(1): 187-8 and tatiana@ncbi.nlm.nih.gov).

Although the final % homology can be measured in terms of identity, the alignment process itself is typically not based on an all-or-nothing pair comparison. Instead, a scaled similarity score matrix is generally used that assigns scores to each pairwise comparison based on chemical similarity or evolutionary distance. An example of such a matrix commonly used is the BLOSUM62 matrix - the default matrix for the BLAST suite of programs. GCG Wisconsin programs generally use either the public default values or a custom symbol comparison table if supplied (see user manual for further details). For some applications, it is preferred to use the public default values for the GCG package, or in the case of other software, the default matrix, such as BLOSUM62.

Once the software has produced an optimal alignment, it is possible to calculate % homology, preferably % sequence identity. The software typically does this as part of the sequence comparison and generates a numerical result.

The sequences may also have deletions, insertions or substitutions of amino acid residues which produce a silent change and result in a functionally equivalent substance. Deliberate amino acid substitutions may be made on the basis of similarity in polarity, charge, solubility, hydrophobicity, hydrophilicity, and/or the amphipathic nature of the residues as long as the secondary binding activity of the substance is retained. For example, negatively charged amino acids include aspartic acid and glutamic acid; positively charged amino acids include lysine and arginine; and amino acids with uncharged polar head groups having similar hydrophilicity values include leucine, isoleucine, valine, glycine, alanine, asparagine, glutamine, serine, threonine, phenylalanine, and tyrosine.

Conservative substitutions may be made, for example according to the Table below. Amino acids in the same block in the second column and preferably in the same line in the third column may be substituted for each other:

| ALIPHATIC | Non-polar | G A P |
|-----------|-----------|-------|
|  |  | I L V |
|  | Polar - uncharged | C S T M |
|  |  | N Q |
|  | Polar - charged | D E |
|  |  | K R |
| AROMATIC |  | H F W Y |

The present invention also encompasses homologous substitution (substitution and replacement are both used herein to mean the interchange of an existing amino acid residue, with an alternative residue) that may occur i. e. like-for-like substitution such as basic for basic, acidic for acidic, polar for polar etc. Non-homologous substitution may also occur i.e. from one class of residue to another or alternatively involving the inclusion of unnatural amino acids such as ornithine (hereinafter referred to as Z), diaminobutyric acid ornithine (hereinafter referred to as B), norleucine ornithine (hereinafter referred to as O), pyriylalanine, thienylalanine, naphthylalanine and phenylglycine.

Replacements may also be made by unnatural amino acids include; alpha* and alpha-disubstituted* amino acids, N-alkyl amino acids*, lactic acid*, halide derivatives of natural amino acids such as trifluorotyrosine*, p-Cl-phenylalanine*, p-Br-phenylalanine*, p-I-phenylalanine*, L-allyl-glycine*, $\beta$-alanine*, L-$\alpha$-amino butyric acid*, L-$\gamma$-amino

butyric acid*, L-α-amino isobutyric acid*, L-ε-amino caproic acid#, 7-amino heptanoic acid*, L-methionine sulfone#', L-norleucine*, L-norvaline*, p-nitro-L-phenylalanine*, L-hydroxyproline#, L-thioproline*, methyl derivatives of phenylalanine (Phe) such as 4-methyl-Phe*, pentamethyl-Phe*, L-Phe (4-amino)#, L-Tyr (methyl)*, L-Phe (4-isopropyl)*, L-Tic (1,2,3,4-tetrahydroisoquinoline-3-carboxyl acid)*, L-diaminopropionic acid# and L-Phe (4-benzyl)*. The notation * has been utilised for the purpose of the discussion above (relating to homologous or non-homologous substitution), to indicate the hydrophobic nature of the derivative whereas # has been utilised to indicate the hydrophilic nature of the derivative, #* indicates amphipathic characteristics.

Variant amino acid sequences may include suitable spacer groups that may be inserted between any two amino acid residues of the sequence including alkyl groups such as methyl, ethyl or propyl groups in addition to amino acid spacers such as glycine or β-alanine residues. A further form of variation, involves the presence of one or more amino acid residues in peptoid form, will be well understood by those skilled in the art. For the avoidance of doubt, "the peptoid form" is used to refer to variant amino acid residues wherein the α-carbon substituent group is on the residue's nitrogen atom rather than the α-carbon. Processes for preparing peptides in the peptoid form are known in the art, for example Simon RJ et al., PNAS (1992) 89(20), 9367-9371 and Horwell DC, Trends Biotechnol. (1995) 13 (4), 132-134.

The nucleotide sequences for use in the present invention may include within them synthetic or modified nucleotides. A number of different types of modification to oligonucleotides are known in the art. These include methylphosphonate and phosphorothioate backbones and/or the addition of acridine or polylysine chains at the 3' and/or 5' ends of the molecule. For the purposes of the present invention, it is to be understood that the nucleotide sequences described herein may be modified by any method available in the art. Such modifications may be carried out in order to enhance the *in vivo* activity or life span of nucleotide sequences of the present invention.

The present invention also encompasses the use of nucleotide sequences that are complementary to the sequences presented herein, or any derivative, fragment or derivative thereof. If the sequence is complementary to a fragment thereof then that sequence can be used as a probe to identify similar coding sequences in other organisms etc.

Polynucleotides which are not 100% homologous to the sequences of the present invention but fall within the scope of the invention can be obtained in a number of ways. Other variants of the sequences described herein may be obtained for example by probing DNA libraries made from a range of individuals, for example individuals from different populations. In addition, other viral/bacterial, or cellular homologues particularly cellular homologues found in mammalian cells (e.g. rat, mouse, bovine and primate cells), may be obtained and such homologues and fragments thereof in general will be capable of selectively hybridising to the sequences shown in the sequence listing herein. Such sequences may be obtained by probing cDNA libraries made from or genomic DNA libraries from other animal species, and probing such libraries with probes comprising all or part of any one of the sequences in the attached sequence listings under conditions of medium to high stringency. Similar considerations apply to obtaining species homologues and allelic variants of the polypeptide or nucleotide sequences of the invention.

Variants and strain/species homologues may also be obtained using degenerate PCR which will use primers designed to target sequences within the variants and homologues encoding conserved amino acid sequences within the sequences of the present invention. Conserved sequences can be predicted, for example, by aligning the amino acid sequences from several variants/homologues. Sequence alignments can be performed using computer software known in the art. For example the GCG Wisconsin PileUp program is widely used.

The primers used in degenerate PCR will contain one or more degenerate positions and will be used at stringency conditions lower than those used for cloning sequences with single sequence primers against known sequences.

Alternatively, such polynucleotides may be obtained by site directed mutagenesis of characterised sequences. This may be useful where for example silent codon sequence changes are required to optimise codon preferences for a particular host cell in which the polynucleotide sequences are being expressed. Other sequence changes may be desired in order to introduce restriction enzyme recognition sites, or to alter the property or function of the polypeptides encoded by the polynucleotides.

Polynucleotides (nucleotide sequences) of the invention may be used to produce a primer, e.g. a PCR primer, a primer for an alternative amplification reaction, a probe e.g. labelled with a revealing label by conventional means using radioactive or non-radioactive labels, or the polynucleotides may be cloned into vectors. Such primers, probes and other fragments will be at least 15, preferably at least 20, for example at least 25, 30 or 40 nucleotides in length, and are also encompassed by the term polynucleotides of the invention as used herein.

Polynucleotides such as DNA polynucleotides and probes according to the invention may be produced recombinantly, synthetically, or by any means available to those of skill in the art. They may also be cloned by standard techniques.

In general, primers will be produced by synthetic means, involving a stepwise manufacture of the desired nucleic acid sequence one nucleotide at a time. Techniques for accomplishing this using automated techniques are readily available in the art.

Longer polynucleotides will generally be produced using recombinant means, for example using a PCR (polymerase chain reaction) cloning techniques. This will involve making a pair of primers (e.g. of about 15 to 30 nucleotides) flanking a region of the lipid targeting sequence which it is desired to clone, bringing the primers into contact with mRNA or cDNA obtained from an animal or human cell, performing a polymerase chain reaction under conditions which bring about amplification of the desired region, isolating the amplified fragment (e.g. by purifying the reaction mixture on an agarose gel) and recovering the amplified DNA. The primers may be designed to contain suitable restriction enzyme recognition sites so that the amplified DNA can be cloned into a suitable cloning vector.

**Hybridisation**

The present invention also encompasses sequences that are complementary to the sequences of the present invention or sequences that are capable of hybridising either to the sequences of the present invention or to sequences that are complementary thereto.

The term "hybridisation" as used herein shall include "the process by which a strand of nucleic acid joins with a complementary strand through base pairing" as well as the process of amplification as carried out in polymerase chain reaction (PCR) technologies.

The present invention also encompasses the use of nucleotide sequences that are capable of hybridising to the sequences that are complementary to the sequences presented herein, or any derivative, fragment or derivative thereof.

The term "variant" also encompasses sequences that are complementary to sequences that are capable of hybridising to the nucleotide sequences presented herein.

Preferably, the term "variant" encompasses sequences that are complementary to sequences that are capable of hybridising under stringent conditions (e.g. 50°C and 0.2xSSC {1xSSC = 0.15 M NaCl, 0.015 M Na$_3$citrate pH 7.0}) to the nucleotide sequences presented herein.

More preferably, the term "variant" encompasses sequences that are complementary to sequences that are capable of hybridising under high stringent conditions (e.g. 65°C and 0.1xSSC {1xSSC = 0.15 M NaCl, 0.015 M Na$_3$citrate pH 7.0}) to the nucleotide sequences presented herein.

The present invention also relates to nucleotide sequences that can hybridise to the nucleotide sequences of the present invention (including complementary sequences of those presented herein).

The present invention also relates to nucleotide sequences that are complementary to sequences that can hybridise to the nucleotide sequences of the present invention (including complementary sequences of those presented herein).

Also included within the scope of the present invention are polynucleotide sequences that are capable of hybridising to the nucleotide sequences presented herein under conditions of intermediate to maximal stringency.

In a preferred aspect, the present invention covers nucleotide sequences that can hybridise to the nucleotide sequence of the present invention, or the complement thereof, under stringent conditions (e.g. 50°C and 0.2xSSC).

In a more preferred aspect, the present invention covers nucleotide sequences that can hybridise to the nucleotide sequence of the present invention, or the complement thereof, under high stringent conditions (e.g. 65°C and 0.1xSSC).

**Site-directed mutagenesis**

Once an enzyme-encoding nucleotide sequence has been isolated, it may be desirable to mutate the sequence in order to prepare an enzyme of the present invention.

Mutations may be introduced using synthetic oligonucleotides. These oligonucleotides contain nucleotide sequences flanking the desired mutation sites.

A suitable method is disclosed in Morinaga *et al* (Biotechnology (1984) 2, p646-649), wherein a single-stranded gap of DNA, the enzyme-encoding sequence, is created in a vector carrying the enzyme gene. The synthetic nucleotide, bearing the desired mutation, is then annealed to a homologous portion of the single-stranded DNA. The remaining gap is then filled in with DNA polymerase I (Klenow fragment) and the construct is ligated using T4 ligase.

US 4,760,025 discloses the introduction of oligonucleotides encoding multiple mutations by performing minor alterations of the cassette. However, an even greater variety of mutations can be introduced at any one time by the above mentioned Morinaga method, because a multitude of oligonucleotides, of various lengths, can be introduced.

Another method of introducing mutations into enzyme-encoding nucleotide sequences is described in Nelson and Long (Analytical Biochemistry (1989), 180, p 147-151). This method involves the 3-step generation of a PCR fragment containing the desired mutation introduced by using a chemically synthesised DNA strand as one of the primers in the PCR reactions. From the PCR-generated fragment, a DNA fragment carrying the mutation may be isolated by cleavage with restriction endonucleases and reinserted into an expression plasmid.

Furthermore, Sierks *et al* (Protein Eng (1989) 2, 621-625 and Protein Eng (1990) 3, 193-198) describes site-directed mutagenesis in *Aspergillus* glucoamylase.

**Expression of enzymes**

The nucleotide sequence for use in the present invention can be incorporated into a recombinant replicable vector. The vector may be used to replicate and express the nucleotide sequence, in enzyme form, in and/or from a compatible host cell. Expression may be controlled using control sequences which include promoters/enhancers and other expression regulation signals. Prokaryotic promoters and promoters functional in eukaryotic cells may be used. Tissue specific or stimuli specific promoters may be used. Chimeric promoters may also be used comprising sequence elements from two or more different promoters described above.

The enzyme produced by a host recombinant cell by expression of the nucleotide sequence may be secreted or may be contained intracellularly depending on the sequence and/or the vector used. The coding sequences can be designed with signal sequences which direct secretion of the substance coding sequences through a particular prokaryotic or eukaryotic cell membrane.

**Expression vector**

The term "expression vector" means a construct capable of *in vivo* or *in vitro* expression.

Preferably, the expression vector is incorporated in the genome of the organism. The term "incorporated" preferably covers stable incorporation into the genome.

Preferably, the vector of the present invention comprises a construct according to the present invention. Alternatively expressed, preferably the nucleotide sequence of the present invention is present in a vector and wherein the nucleotide sequence is operably linked to regulatory sequences such that the regulatory sequences are capable of providing the expression of the nucleotide sequence by a suitable host organism, i.e. the vector is an expression vector.

The vectors of the present invention may be transformed into a suitable host cell as described below to provide for expression of a polypeptide of the present invention. Thus, in a further aspect the invention provides a process for preparing polypeptides for subsequent use according to the present invention which comprises cultivating a host cell transformed or transfected with an expression vector as described above under conditions to provide for expression by the vector of a coding sequence encoding the polypeptides, and recovering the expressed polypeptides.

The vectors may be for example, plasmid, virus or phage vectors provided with an origin of replication, optionally a promoter for the expression of the said polynucleotide and optionally a regulator of the promoter. The choice of vector will often depend on the host cell into which it is to be introduced.

The vectors of the present invention may contain one or more selectable marker genes. The most suitable selection systems for industrial micro-organisms are those formed by the group of selection markers which do not require a mutation in the host organism. Suitable selection markers may be the *dal* genes from *B. subtilis* or *B. licheniformis,* or one which confers antibiotic resistance such as ampicillin, kanamycin, chloramphenicol or tetracyclin resistance. Alternative selection markers may be the *Aspergillus* selection markers such as amdS, argB, niaD and sC, or a marker giving rise to hygromycin resistance. Examples of other fungal selection markers are the genes for ATP synthetase, subunit 9 (*oli*C), orotidine-5'-phosphate-decarboxylase *(pvrA),* phleomycin and benomyl resistance (benA). Examples of non-fungal selection markers are the bacterial G418 resistance gene (this may also be used in yeast, but not in filamentous fungi), the ampicillin resistance gene (*E. coli*), the neomycin resistance gene *(Bacillus)* and the E. *coli uidA* gene, coding for β-glucuronidase (GUS). Further suitable selection markers include the *dal* genes from *B subtilis* or *B. licheniformis.* Alternatively, the selection may be accomplished by co-transformation (as described in W091/17243).

Vectors may be used *in vitro,* for example for the production of RNA or used to transfect or transform a host cell.

Thus, nucleotide sequences for use according to the present invention can be incorporated into a recombinant vector (typically a replicable vector), for example a cloning or expression vector. The vector may be used to replicate the nucleic acid in a compatible host cell. Thus in a further embodiment, the invention provides a method of making nucleotide sequences of the present invention by introducing a nucleotide sequence of the present invention into a replicable vector, introducing the vector into a compatible host cell, and growing the host cell under conditions which bring about replication of the vector. The vector may be recovered from the host cell. Suitable host cells are described below in connection with expression vectors.

The procedures used to ligate a DNA construct of the invention encoding an enzyme which has the specific properties as defined herein, and the regulatory sequences, and to insert them into suitable vectors containing the information necessary for replication, are well known to persons skilled in the art (for instance see Sambrook *et al* Molecular Cloning: A laboratory Manual, 2nd Ed. (1989)).

The vector may further comprise a nucleotide sequence enabling the vector to replicate in the host cell in question. Examples of such sequences are the origins of replication of plasmids pUC19, pACYC177, pUB110, pE194, pAMB1 and pIJ702.

**Regulatory sequences**

In some applications, the nucleotide sequence for use in the present invention is operably linked to a regulatory sequence which is capable of providing for the expression of the nucleotide sequence, such as by the chosen host cell. By way of example, the present invention covers a vector comprising the nucleotide sequence of the present invention operably linked to such a regulatory sequence, i.e. the vector is an expression vector.

The term "operably linked" refers to a juxtaposition wherein the components described are in a relationship permitting them to function in their intended manner. A regulatory sequence "operably linked" to a coding sequence is ligated in such a way that expression of the coding sequence is achieved under condition compatible with the control sequences.

The term "regulatory sequences" includes promoters and enhancers and other expression regulation signals.

The term "promoter" is used in the normal sense of the art, e.g. an RNA polymerase binding site.

Enhanced expression of the nucleotide sequence encoding the enzyme of the present invention may also be achieved by the selection of heterologous regulatory regions, e.g. promoter, secretion leader and terminator regions, which serve to increase expression and, if desired, secretion levels of the protein of interest from the chosen expression host and/or to provide for the inducible control of the expression of the enzyme of the present invention. In eukaryotes, polyadenylation sequences may be operably connected to the nucleotide sequence encoding the enzyme.

Preferably, the nucleotide sequence of the present invention may be operably linked to at least a promoter.

Aside from the promoter native to the gene encoding the nucleotide sequence of the present invention, other promoters may be used to direct expression of the polypeptide of the present invention. The promoter may be selected for its efficiency in directing the expression of the nucleotide sequence of the present invention in the desired expression host.

In another embodiment, a constitutive promoter may be selected to direct the expression of the desired nucleotide sequence of the present invention. Such an expression construct may provide additional advantages since it circumvents the need to culture the expression hosts on a medium containing an inducing substrate.

Examples of strong constitutive and/or inducible promoters which are preferred for use in fungal expression hosts are those which are obtainable from the fungal genes for xylanase *(xlnA),* phytase, ATP-synthetase, subunit 9 (*oli*C), triose phosphate isomerase *(tpi),* alcohol dehydrogenase *(AdhA),* α-amylase (amy), amyloglucosidase (AG - from the *gla*A gene), acetamidase (*amd*S) and glyceraldehyde-3-phosphate dehydrogenase (*gpd*) promoters. Other examples of useful promoters for transcription in a fungal host are those derived from the gene encoding A. oryzae TAKA amylase, the TPI (triose phosphate isomerase) promoter from S. *cerevisiae* (Alber *et al* (1982) J. Mol. Appl. Genet. 1, p419-434), *Rhizomucor miehei* aspartic proteinase, A. *niger* neutral α-amylase, *A. niger* acid stable α-amylase, *A. niger* glucoamylase, *Rhizomucor miehei* lipase, *A. oryzae* alkaline protease, *A oryzae* triose phosphate isomerase or *A. nidulans* acetamidase.

Examples of strong yeast promoters are those obtainable from the genes for alcohol dehydrogenase, lactase, 3-phosphoglycerate kinase and triosephosphate isomerase.

Examples of strong bacterial promoters are the α-amylase and *SP02* promoters as well as promoters from extracellular protease genes. Examples of other suitable promoters for directing the transcription of the nucleotide sequence especially in a bacterial host are the promoters of the *lac* operon of E. *coli,* the *Streptomyces coelicolor* agarase gene *dagA* promoters, the promoters of the *Bacillus licheniformis* α-amylase gene *(amyL),* the promoters of the *Bacillus stearothermophilus* maltogenic amylase gene *(amyM),* the promoters of the *Bacillus amyloliquefaciens* α-amylase *(amyQ),* the promoters of the *Bacillus subtilis* xylA and xylB genes.

Hybrid promoters may also be used to improve inducible regulation of the expression construct.

The promoter can additionally include features to ensure or to increase expression in a suitable host. For example, the features can be conserved regions such as a Pribnow Box or a TATA box. The promoter may even contain other sequences to affect (such as to maintain, enhance, decrease) the levels of expression of the nucleotide sequence of the present invention. For example, suitable other sequences include the Sh1-intron or an ADH intron. Other sequences include inducible elements - such as temperature, chemical, light or stress inducible elements. Also, suitable elements to enhance transcription or translation may be present. An example of the latter element is the TMV 5' signal sequence (see Sleat 1987 Gene 217, 217-225 and Dawson 1993 Plant Mol. Biol. 23: 97).

**Constructs**

The term "construct" - which is synonymous with terms such as "conjugate", "cassette" and "hybrid" - includes a nucleotide sequence for use according to the present invention directly or indirectly attached to a promoter. An example of an indirect attachment is the provision of a suitable spacer group such as an intron sequence, such as the Sh1-intron or the ADH intron, intermediate the promoter and the nucleotide sequence of the present invention. The same is true for the term "fused" in relation to the present invention which includes direct or indirect attachment. In some cases, the terms do not cover the natural combination of the nucleotide sequence coding for the protein ordinarily associated with the wild type gene promoter and when they are both in their natural environment.

The construct may even contain or express a marker which allows for the selection of the genetic construct in, for example, a bacterium, preferably of the genus Bacillus, such as *Bacillus subtilis,* or plants into which it has been transferred. Various markers exist which may be used, such as for example those encoding mannose-6-phosphate isomerase (especially for plants) or those markers that provide for antibiotic resistance - e.g. resistance to G418, hygromycin, bleomycin, kanamycin and gentamycin.

For some applications, preferably the construct of the present invention comprises at least the nucleotide sequence of the present invention operably linked to a promoter.

**Host cells**

The term "host cell" - in relation to the present invention includes any cell that comprises either the nucleotide sequence or an expression vector as described above and which is used in the recombinant production of an enzyme having the specific properties as defined herein.

Thus, a further embodiment of the present invention provides host cells transformed or transfected with a nucleotide sequence that expresses the enzyme of the present invention. Preferably said nucleotide sequence is carried in a vector for the replication and expression of the nucleotide sequence. The cells will be chosen to be compatible with the said vector and may for example be prokaryotic (for example bacterial), fungal, yeast or plant cells.

The gram negative bacterium *E. coli* is widely used as a host for heterologous gene expression. However, large amounts of heterologous protein tend to accumulate inside the cell. Subsequent purification of the desired protein from the bulk of *E. coli* intracellular proteins can sometimes be difficult.

In contrast to E. *coli,* Gram positive bacteria from the genus Bacillus, such as B. *subtilis, B. licheniformis, B. lentus, B. brevis, B. stearothermophilus, B. alkalophilus, B. amyloliquefaciens, B. coagulans, B. circulans, B. lautus, B. megaterium, B. thuringiensis, Streptomyces lividans* or S. *murinus,* may be very suitable as heterologous hosts because of their capability to secrete proteins into the culture medium. Other bacteria that may be suitable as hosts are those from the genera Streptomyces and Pseudomonas.

Depending on the nature of the nucleotide sequence encoding the enzyme of the present invention, and/or the desirability for further processing of the expressed protein, eukaryotic hosts such as yeasts or other fungi may be preferred. In general, yeast cells are preferred over fungal cells because they are easier to manipulate. However, some proteins are either poorly secreted from the yeast cell, or in some cases are not processed properly (e.g. hyperglycosylation in yeast). In these instances, a different fungal host organism should be selected.

Suitable yeast organisms may be selected from the species of *Kluyveromyces, Saccharomyces or Schizosaccharomyces,* e.g. *Saccharomyces cerevisiae,* or *Hansenula* (disclosed in UK Patent Application No. 9927801.2).

Suitable filamentous fungus may be for example a strain belonging to a species of Aspergillus, such as *Aspergillus oryzae* or *Aspergillus niger,* or a strain of *Fusarium oxysporium, Fusarium graminearum* (in the perfect state named *Gribberella zeae,* previously *Sphaeria zeae,* synonym with *Gibberella roseum* and *Gibberella roseum* f. sp. *Cerealis),* or *Fusarium sulphureum* (in the perfect state named *Gibberella puricaris,* synonym with *Fusarium trichothercioides, Fusarium bactridioides, Fusarium sambucium, Fusarium roseum* and *Fusarium roseum var. graminearum), Fusarium cerealis* (synonym with *Fusarium crokkwellnse)* or *Fusarium venenatum.*

By way of example, typical expression hosts may be selected from *Aspergillus niger, Aspergillus niger var. tubigenis, Aspergillus niger var. awamori, Aspergillus aculeatis, Aspergillus nidulans, Aspergillus* oryzae, *Trichoderma* reesei, *Bacillus subtilis, Bacillus licheniformis, Bacillus amyloliquefaciens, Kluyveromyces lactis* and Saccharomyces *cerevisiae.*

The use of suitable host cells - such as yeast, fungal and plant host cells - may provide for post-translational modifications (e.g. myristoylation, glycosylation, truncation, lapidation and tyrosine, serine or threonine phosphorylation) as may be needed to confer optimal biological activity on recombinant expression products of the present invention.

The host cell may be a protease deficient or protease minus strain. This may for example be the protease deficient strain *Aspergillus oryzae* JaL 125 having the alkaline protease gene named "alp" deleted. This strain is described in W097/35956.

**Organism**

The term "organism" in relation to the present invention includes any organism that could comprise the nucleotide sequence coding for the enzyme according to the present invention and/or products obtained therefrom, and/or wherein a promoter can allow expression of the nucleotide sequence according to the present invention when present in the organism.

Suitable organisms may include a prokaryote, fungus, yeast or a plant.

The term "transgenic organism" in relation to the present invention includes any organism that comprises the nucleotide sequence coding for the enzyme according to the present invention and/or the products obtained therefrom, and/or wherein a promoter can allow expression of the nucleotide sequence according to the present invention within the organism. Preferably the nucleotide sequence is incorporated in the genome of the organism.

The term "transgenic organism" does not cover native nucleotide coding sequences in their natural environment when they are under the control of their native promoter which is also in its natural environment.

Therefore, the transgenic organism of the present invention includes an organism comprising any one of, or combinations of, the nucleotide sequence coding for the enzyme according to the present invention, constructs according to the present invention, vectors according to the present invention, plasmids according to the present invention, cells according to the present invention, tissues according to the present invention, or the products thereof. For example the transgenic organism can also comprise the nucleotide sequence coding for the enzyme of the present invention under the control of a heterologous promoter.

**Transformation of host cells/organism**

As indicated earlier, the host organism can be a prokaryotic or a eukaryotic organism. Examples of suitable prokaryotic hosts include E. *coli* and *Bacillus subtilis.* Teachings on the transformation of prokaryotic hosts is well documented in the art, for example see Sambrook *et al* (Molecular Cloning: A Laboratory Manual, 2nd edition, 1989, Cold Spring Harbor Laboratory Press) and Ausubel *et al.,* Current Protocols in Molecular Biology (1995), John Wiley & Sons, Inc.

If a prokaryotic host is used then the nucleotide sequence may need to be suitably modified before transformation - such as by removal of introns.

In another embodiment the transgenic organism can be a yeast. In this regard, yeast have also been widely used as a vehicle for heterologous gene expression. The species Saccharomyces cerevisiae has a long history of industrial use, including its use for heterologous gene expression. Expression of heterologous genes in Saccharomyces cerevisiae has been reviewed by Goodey *et al* (1987, Yeast Biotechnology, D R Berry *et al,* eds, pp 401-429, Allen and Unwin, London) and by King *et al* (1989, Molecular and Cell Biology of Yeasts, E F Walton and G T Yarronton, eds, pp 107-133, Blackie, Glasgow).

For several reasons *Saccharomyces cerevisiae* is well suited for heterologous gene expression. First, it is non-pathogenic to humans and it is incapable of producing certain endotoxins. Second, it has a long history of safe use following centuries of commercial exploitation for various purposes. This has led to wide public acceptability. Third, the extensive commercial use and research devoted to the organism has resulted in a wealth of knowledge about the genetics and physiology as well as large-scale fermentation characteristics of *Saccharomyces cerevisiae.*

A review of the principles of heterologous gene expression in *Saccharomyces cerevisiae* and secretion of gene products is given by E Hinchcliffe E Kenny (1993, "Yeast as a vehicle for the expression of heterologous genes", Yeasts, Vol 5, Anthony H Rose and J Stuart Harrison, eds, 2nd edition, Academic Press Ltd.).

Several types of yeast vectors are available, including integrative vectors, which require recombination with the host genome for their maintenance, and autonomously replicating plasmid vectors.

In order to prepare the transgenic Saccharomyces, expression constructs are prepared by inserting the nucleotide sequence of the present invention into a construct designed for expression in yeast. Several types of constructs used for heterologous expression have been developed. The constructs contain a promoter active in yeast fused to the nucleotide sequence of the present invention, usually a promoter of yeast origin, such as the GAL1 promoter, is used. Usually a signal sequence of yeast origin, such as the sequence encoding the SUC2 signal peptide, is used. A terminator active in yeast ends the expression system.

For the transformation of yeast several transformation protocols have been developed. For example, a transgenic Saccharomyces according to the present invention can be prepared by following the teachings of Hinnen *et al* (1978, Proceedings of the National Academy of Sciences of the USA 75, 1929); Beggs, J D (1978, Nature, London, 275, 104); and Ito, H etal(1983, J Bacteriology 153, 163-168).

The transformed yeast cells are selected using various selective markers. Among the markers used for transformation are a number of auxotrophic markers such as LEU2, HIS4 and TRP1, and dominant antibiotic resistance markers such as aminoglycoside antibiotic markers, eg G418.

Filamentous fungi cells may be transformed by a process involving protoplast formation and transformation of the protoplasts followed by regeneration of the cell wall in a manner known. The use of *Aspergillus* as a host microorganism is described in EP 0 238 023.

Another host organism is a plant. The basic principle in the construction of genetically modified plants is to insert genetic information in the plant genome so as to obtain a stable maintenance of the inserted genetic material. Several techniques exist for inserting the genetic information, the two main principles being direct introduction of the genetic information and introduction of the genetic information by use of a vector system. A review of the general techniques may be found in articles by Potrykus (Annu Rev Plant Physiol Plant Mol Biol [1991] 42:205-225) and Christou (Agro-Food-Industry Hi-Tech March/April 1994 17-27). Further teachings on plant transformation may be found in EP-A-0449375.

Host cells transformed with the nucleotide sequence may be cultured under conditions conducive to the production of the encoded enzyme and which facilitate recovery of the enzyme from the cells and/or culture medium.

The medium used to cultivate the cells may be any conventional medium suitable for growing the host cell in questions and obtaining expression of the enzyme. Suitable media are available from commercial suppliers or may be prepared according to published recipes (e.g. as described in catalogues of the American Type Culture Collection).

The protein produced by a recombinant cell may be displayed on the surface of the cell. If desired, and as will be understood by those of skill in the art, expression vectors containing coding sequences can be designed with signal sequences which direct secretion of the coding sequences through a particular prokaryotic or eukaryotic cell membrane. Other recombinant constructions may join the coding sequence to nucleotide sequence encoding a polypeptide domain which will facilitate purification of soluble proteins (Kroll DJ *et al* (1993) DNA Cell Biol 12:441-53).

The enzyme may be secreted from the host cells and may conveniently be recovered from the culture medium by well-known procedures, including separating the cells from the medium by centrifugation or filtration, and precipitating proteinaceous components of the medium by means of a salt such as ammonium sulphate, followed by the use of chromatographic procedures such as ion exchange chromatography, affinity chromatography, or the like.

**Secretion**

Often, it is desirable for the enzyme to be secreted from the expression host into the culture medium from where the enzyme may be more easily recovered. According to the present invention, the secretion leader sequence may be selected on the basis of the desired expression host. Hybrid signal sequences may also be used with the context of the present invention.

Typical examples of heterologous secretion leader sequences are those originating from the fungal amyloglucosidase (AG) gene *(gla*A - both 18 and 24 amino acid versions e.g. from *Aspergillus),* the a-factor gene (yeasts e.g. *Saccharomyces, Kluyveromyces* and *Hansenula)* or the α-amylase gene *(Bacillus).*

**Fusion Proteins**

The amino acid sequence of the present invention may be produced as a fusion protein, for example to aid in extraction and purification. Examples of fusion protein partners include glutathione-S-transferase (GST), 6xHis, GAL4 (DNA binding and/or transcriptional activation domains) and (β-galactosidase. It may also be convenient to include a proteolytic cleavage site between the fusion protein partner and the protein sequence of interest to allow removal of fusion protein sequences. Preferably the fusion protein will not hinder the activity of the protein sequence.

The fusion protein may comprise an antigen or an antigenic determinant fused to the substance of the present invention. In this embodiment, the fusion protein may be a non-naturally occurring fusion protein comprising a substance which may act as an adjuvant in the sense of providing a generalised stimulation of the immune system. The antigen or antigenic determinant may be attached to either the amino or carboxy terminus of the substance.

In another embodiment of the invention, the amino acid sequence may be ligated to a heterologous sequence to encode a fusion protein. For example, for screening of peptide libraries for agents capable of affecting the substance activity, it may be useful to encode a chimeric substance expressing a heterologous epitope that is recognised by a commercially available antibody.

The invention is further illustrated in the following non-limiting examples and the drawings where:

Fig. 1 illustrates the effect on bread crumb structure of a commercial lipase, GRINDAMYL™ EXEL 16 (200 ppm) (bread rolls to the left), Lipase SP 972 (1000, 2500 and 5000 LUT/kg flour, respectively) (rolls 2-4) as compared to a control without addition of lipase (rolls to the right);

Fig. 2 shows the effect on bread volume and crumb structure of addition of oat lipid alone (bread to the left), oat lipid + 1010 ppm SP 979 (bread in the middle) and oat lipid + 200 ppm GRINDAMYL™ EXEL 16 (bread to the right),

Fig. 3 illustrates the relationship between the ability of Lipase SP 972 and Lipase SP 979 to hydrolyse triglycerides and their ability to hydrolyse glycolipids, and

Fig. 4 illustrates the relationship between the ability of Lipase SP 972 and Lipase SP 979 to hydrolyse triglycerides and the ability to hydrolyse phospholipids.

EXAMPLES

**Materials and methods**

*1. Enzymes used*

Enzyme preparations designated SP 972 and SP 979, which enzymes are modified lipolytic enzymes capable of hydrolysing a nonpolar lipid, a glycolipid and a phospholipid, were obtained from Novo Nordisk, Bagsvaerd, Denmark. The enzyme designations are those used by Novo Nordisk.
In addition, a commercially available enzyme preparation was obtained from Fluka Chemie AG, Switzerland (designated catalogue number 62299). This enzyme originates from *Candida antarctica.*
The following lipases were used as references: GRINDAMYL™ EXEL16 (Danisco Ingredients, Brabrand, Denmark) and Stalingase™ (Gist-brocades, Delfts, the Netherlands).

*2. Lipase activity using tributyrin as substrate (LUT and LIPU)*

Lipase activity based on the use of tributyrin as substrate was measured as described in Food Chemical Codex, 4th edition, National Academy Press, 1996, p. 803 with the modification that samples were dissolved in deionised water instead of glycine buffer and that the pH-stat set point was 5.5 instead of 7.
1 LUT is defined as the amount of enzyme which can liberate 2 $\mu$mol butyric acid per min. under the assay conditions. 1 LIPU is defined as the amount of enzyme that can liberate 1 $\mu$mol butyric acid per min. under the assay conditions.

*3. Lipase assay based on the use of sunflower oil as substrate (LUSoI, pH 6.5)*

Reagents: 8.4 g gum arabic is dissolved in 100 ml demineralised water and 100 ml 30 mM $CaCl_2$ is added. 36 ml sunflower oil is added slowly under mixing using an Ultra Turrax™ mixer at 20,000 rpm to obtain an emulsion.
Assay: 20 ml of sunflower oil emulsion in a beaker is equilibrated at 30°C for 5 min. and pH adjusted to 6.3-6.5 using a pH-stat. 2 ml of enzyme preparation is added and 0.05 N NaOH is added continuously while keeping the pH at 6.5 for 10 min. The slope of the curve for addition of 0.05 N NaOH as a function of time is calculated.
1 LUSoI is defined as the quantity of enzyme that can liberate 1 $\mu$mol fatty acid per min. under assay conditions.

*4. Phospholipase assay (PLU, pH 8.0)*

Substrate: 8 g of lecithin powder (Metarin P,074793) is dissolved in 150 ml water under heating to 40-50°C. 40 ml of 50 mM $CaCl_2$ is added and water is added to 200 ml. The substrate mixture is homogenised for 1 min. using an Ultra Turrax™ mixer at 20,000 rpm.
Assay: 20.0 ml of substrate is transferred to a beaker and equilibrated at 30°C for 5 min. and pH adjusted to 8.0 and 2 ml of enzyme preparation is added followed by continuously adding 0.05 N NaOH for 10 minutes while keeping the pH at 8.0.
The slope of the curve for the addition of 0.05 N NaOH as a function of time is calculated. 1 PLU is defined as the amount of enzyme which can liberate 1 $\mu$mol of fatty acid per min. under assay conditions.

*5. Baking test (Toast bread)*

2000 g of Danish reform flour, 30 g of dry yeast, 30 g of sugar, 30 g of salt and water at 400 Brabender units (BU) + 3% was kneaded using a Hobart™ Mixer with hook for 2 min. at low speed and 10 min. at high speed. Dough temperature after mixing was 25°C.
Resting time was 10 min. at 30°C. The dough was scaled at 750 g per dough and rested again for 5 min. at 33°C and 85% RH. Moulding was carried out using a Glimik™ moulder. The doughs were proofed in tins for 50 min. at 33°C and baked in Wachtel™ oven for 40 min. at 220°C and steam injection for 16 sec. After cooling, the bread was scaled and the volume of the bread measured using the rape seed displacement method.
The crumb was also evaluated subjectively on a scale 1 to 10, where 1 = coarse structure and 10 = homogeneous structure.
Three loaves baked in tins provided with lids were stored at 20°C and used for firmness measurements.

6. *Firmness measurement*

Firmness of bread was measured using an Instron™ UTM model 4301 connected to a computer. Conditions for measurements were as follows:

| Load cell | Max 100 N |
|---|---|
| Piston diameter | 50 mm |
| Cross Head Speed | 200 mm/min. |
| Compression | 25% |
| Bread slice thickness | 11 mm |

The force is converted to $N/dm^2$. The results were calculated as an average of 10 bread slices per loaf.

7. *Baking test (Hard crust rolls)*

1500 g of Danish reform flour, 90 g of compressed yeast, 24 g sugar, 24 g salt and water at 400 Brabrender units + 2% were kneaded using a Hobart™ mixer with hook for 2 min. at low speed and 6 min. at high speed. The dough temperature was 26°C. The dough was scaled at 1350 g and was rested for 10 min. at 30°C and moulded using a Fortuna™ moulder. The moulded dough was proofed for 45 min. at 34°C and baked in a Bago™ oven for 18 min. at 220°C and with steam for 12 sec. After cooling, the rolls were scaled and the volume of the rolls was measured using the rape seed displacement method.
The specific volume of the rolls was calculated as follows:

$$\text{Specific volume} = \frac{\text{Volume of the bread, ml}}{\text{weight of bread, g}}$$

8. *Mini baking test*

50 g of Danish reform flour, 10 g dry yeast, 0.8 g sugar, 0.8 g salt, 70 ppm ascorbic acid and water at 400 Brabender units was kneaded using a 50 g Brabrender™ mixing bowl for 5 min. at 30°C. Resting time was 10 min. at 34°C. The dough was scaled at 15 g per dough and moulded using a device where the dough is rolled between a wooden plate and a plexiglass frame. The doughs were proofed in tins for 45 min. at 34°C and baked in a Voss™ household oven for 8 min. at 225°C. Following baking, the miniloaves were cooled to ambient temperature and after 20 min. the loaves were scaled and the volume determined by the rape seed displacement method. The loaves were cut and the crumb and crust evaluated.

9. *Lipid extraction and fatty acid analysis*

20 g of fully proofed dough was frozen immediately and freeze-dried. The freeze-dried dough was milled using a coffee bean mill and passed through a 800 µm screen. 2 g of freeze-dried dough was scaled using a 15 ml centrifuge tube with screw cap. 10 ml of water-saturated butanol (WSB) was added. The centrifuge tube was placed in a boiling water-bath for 10 min. The tubes were placed in a Rotamix™ apparatus and turned at 45 rpm for 20 min. at ambient temperature and subsequently placed in a boiling water-bath for 10 min and turned on the Rotamix™ apparatus for 30 min. at ambient temperature. The tubes were centrifuged at 3,500 g for 5 min. 5 ml of supernatant was transferred into a vial. WSB was evaporated to dryness under a stream of nitrogen.
The free fatty acids in the extract were analysed as Cu salts in isooctane measured at 715 nm and quantified according to a calibration curve based on oleic acid (Kwon, D.Y. and J.S. Rhee (1986), A Simple and Rapid Colourimetric Method for Determination of Free Fatty Acids for Lipase Assay, JAOCS 63:89).

10. *HPLC analysis*

Column: Lichrospher™ 100 DIOL 5 µm (Merck art. 16152) 250 x 4.0 id with water jacket, 50°C.

Mobile phase:

A: heptane/isopropanol/butanol/tetrahydrofuran/isooctane/$H_2O^*$
, 64.5/17.5/7/5/5/1
B: isopropanol/butanol/tetrahydrofuran/isooctane/$H_2O^*$, 730/7/5/5/10
*1 mmol trifluroacetic acid/l of mobile phase
(pH = 6.6 adjusted with $NH_2$)

Pump: Waters™ 510 + Gradient controller

| Gradient: | | | |
|---|---|---|---|
| Flow: ml/min. | Time: min. | % A | % B |
| 1.0 | 0 | 100 | 0 |
| 1.0 | 25 | 0 | 100 |
| 1.0 | 30 | 0 | 100 |
| 1.0 | 35 | 100 | 0 |
| 1.0 | 40 | 100 | 0 |

Detector: CUNOW™ DDL21 (evaporative light scattering) (temp: 100°C, voltage: 600, air flow: 6.0 l/min.)
Injector: Hewlett Packard™ 1050, injection volume 50 µl
Sample preparation: The wheat lipid was dissolved in 5 ml CHCl3/CH30H (75:25), sonicated for 10 min. and filtered through a filter having a pore size of 0.45 µm.
Calculation: Calibration curve for PC (lecithin standard from International Lecithin and Phospholipid Society)
Reference: Arnoldsson, K.C. and P. Kaufmann (1996), Chromatographia 38:317

*11. Gas chromatography*

Perkin Elmer™ 8420 Capillary Gas Chromatograph equipped with a WCOT fused silica column, 12.5 x 0.25 mm ID and 0.1 µm 5% phenylmethyl silicone (CP Sil 8 CB from Chrompack) was used with helium as carrier under the following conditions:

Detector: FID, 385°C

| Oven programme: | | | | |
|---|---|---|---|---|
| Programme No. | 1 | 2 | 3 | 4 |
| Oven temperature, °C | 80 | 200 | 240 | 360 |
| Isothermal time, min. | 2 | 0 | 0 | 10 |
| Temperature rate, °C/min. | 20 | 10 | 12 | |

Sample preparation: 50 mg wheat lipid was dissolved in 12 ml heptane:pyridine, 2:1 containing 2 mg/ml heptadecane as an internal standard. 500 µl was transferred to a crimp vial and 100 µl MSTFA (N-Methyl-N-trimethylsilyl-trifluoroacetamide) was added and reacted for 15 min. at 90°C).
Calculation: Response factors for mono-, di- and triglycerides and free fatty acids were determined from reference mixtures of these components. Based on these response factors the content of mono-, di- and triglycerides and free fatty acids in wheat lipids were calculated.

*1 mmol trifluroacetic acid/l of mobile phase(pH = 6.6 adjusted with $NH_3$)

*12. Enzymatic activities of enzymes used in the following examples:*

| Enzyme | LIPU/g | LUSol/g | PLU/g |
|---|---|---|---|
| Lipase SP 979 | 0 | 65 | 1984 |
| Lipase SP 972 | 280 | 40 | 2450 |
| GRINDAMYL EXEL 16 | 3000 | 450 | 0 |
| Stalingase, # 1867, purified | 42.5 | 24.7 | 5 |
| Lipase 3 (2524-120) | 4600 | 2910 | 24 |

EXAMPLE 1

**The effect of SP 972 and GRINDAMYL™ EXEL 16 in hard crust rolls**

The rolls were baked and tested according to the procedures described above. The results are summarised in the below Table 1.1:

Table 1.1

| Specific volume and crumb score (1-10) | | |
|---|---|---|
| Enzyme | Specific volume, ml/g | Crumb score |
| Control w/o enzyme | 5.33 | 4 |
| 200 ppm EXEL 16 | 5.65 | 7 |
| 1000 LUT/kg SP972 | 5.70 | 6 |
| 2500 LUT/kg SP972 | 5.99 | 8 |
| 5000 LUT/kg SP972 | 5.46 | 8 |

Fully proofed doughs from this baking test were extracted and the content of free fatty acids was measured. The results are summarised in Table 1.2:

Table 1.2

| Content of free fatty acid in proofed douqhs | |
|---|---|
| Enzyme | % free fatty acids |
| Control w/o enzyme | 0.229 |
| 200 ppm EXEL 16 | 0.303 |
| 1000 LUT/kg SP972 | 0.349 |
| 2500 LUT/kg SP972 | 0.324 |
| 5000 LUT/kg SP972 | 0.364 |

These results indicate a clear effect of Lipase SP 972 on the fatty acid formation in doughs.

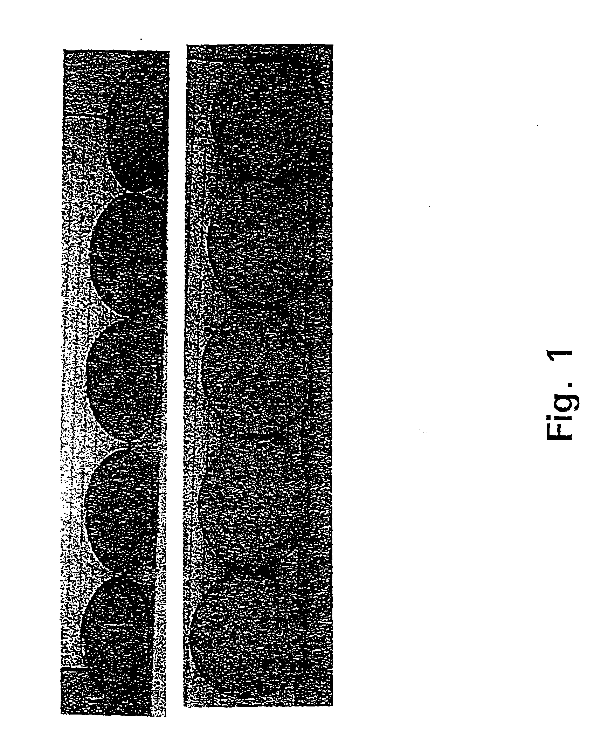

Additionally, the bread volume is significantly improved by the addition of Lipase 972 and this enzyme confers a more white and homogeneous crumb structure as it is illustrated in Fig. 1.

EXAMPLE 2

**The content of fatty acids and polar lipids in proofed doughs supplemented with lipase**

Five test doughs (1-5) were mixed using a 50 g Brabender™ Farinograph at 30°C for 5 min. and proofed at 34°C for 60 min. followed immediately by freezing and freeze-drying.

The compositions of the test doughs are summarised in Table 2.1:

Table 2.1

| Composition of test doughs | | | | | |
|---|---|---|---|---|---|
| Component | Test dough 1 (control) | Test dough 2 | Test dough 3 | Test dough 4 | Test dough 5 |
| Reform flour, g | 50 | 50 | 50 | 50 | 50 |
| Dry yeast, g | 0.38 | 0.38 | 0.38 | 0.38 | 0.38 |
| Salt, g | 0.75 | 0.75 | 0.75 | 0.75 | 0.75 |
| Water at 500 BU (54%), ml | 27 | 26.19 | 24.95 | 22.94 | 18.87 |
| SP972 (560 LUT/ml), ml | 0 | 0.813 | 2.05 | 4.06 | 8.13 |
| LUT/kg flour | 0 | 894 | 2236 | 4472 | 8943 |

The content of fatty acids were analysed by GC. The results of these analyses are summarised in Table 2.2:

Table 2.2

| Content of fatty acids in test doughs 1-5 | |
|---|---|
| Test dough | % fatty acids |
| 1 | 0.180 |
| 2 | 0.394 |
| 3 | 0.410 |
| 4 | 0.469 |
| 5 | 0.522 |

Additionally, the content of polar lipids in the control dough (test dough 1) and test dough 5 were analysed by HPLC as described above. The results are summarised in Table 2.3:

Table 2.3

| Content of polar lipids in test doughs containing 0 and 8943 LUT lipase, respectively | | |
|---|---|---|
| Polar lipid | % polar lipid in control dough 1 | % polar lipid in test dough 5 |
| Acylated phosphatidylethanoleamine (APE) | 0.044 | 0.056 |
| Digalacosyldiglyceride (DGDG) | 0.209 | 0.022 |
| Phosphatidylcholine (PC) | 0.051 | 0.003 |
| Digalactosylmonoglyceride (DGMG) | 0.015 | 0.103 |
| Lysophosphatidylcholine (LPC) | 0.268 | 0.301 |

The above results indicate a clear effect of Lipase SP 972 on the formation of fatty acids. Even at the lowest dosage of 894 LUT/kg flour, a significant increase in fatty acid content in the test dough was observed. The HPLC analyses indicate a remarkable effect in respect of hydrolysis of phospholipids and glycolipids.
Accordingly, these experiments demonstrates that the SP 972 Lipase is capable of utilising glycerides, phospholipids and glycolipids as substrate.

EXAMPLE 3

**The effect of Lipase SP 972 alone and in combination with soy lecithin on the content of fatty acids and polar lipids in hard crust roll dough and the quality of the baked rolls**

Lipase SP 972 was tested for its activity alone and in combination with soy lecithin on the quality of hard crust rolls. A commercial lipase product, GRINDAMYL™ EXEL 16 (EXEL 16) and a commercial DATEM emulsifier, Panodan™ A 2020 were tested for comparison.

The used amounts of enzyme and emulsifier additives and the quality characteristics of the respective baked rolls are summarised in Table 3.1:

Table 3.1

| Enzyme and emulsifier additions and bread quality | | | |
|---|---|---|---|
| | Specific volume, ml/g | Crumb score (1-10) | Crust score (1-10) |
| Control | 5.95 | 3 | 3 |
| 0.2% Panodan A 2020 | 6.14 | N.D[1] | N.D[1] |
| 750 LUT/kg SP 972 | 6.77 | 8 | 7 |
| 1500 LUT/kg SP 972 | 6.65 | 7 | 6 |
| 750 LUT/kg SP 972 + 0.5% lecithin | 6.94 | 5 | 8 |
| 1500 LUT/kg SP 972 + 0.5% lecithin | 7.2 | 5 | 7 |
| 900 LUT/kg EXEL 16 | 6.38 | 7 | 5 |
| 1800 LUT/kg EXEL 16 | 6.2 | 6 | 6 |
| 900 LUT/kg EXEL 16 + 0.5% lecithin | 6.3 | 5 | 7 |
| 1800 LUT/kg EXEL 16 + 0.5% lecithin | 6.35 | 7 | 7 |

[1]Not determined

Baking experiments using Lipase SP 972 as compared to GRINDAMYL™ EXEL 16 or Panodan A 2020 emulsifier showed excellent baking performance of SP 972 both alone and in combination with soy lecithin. This effect is significantly better than that of the commercial lipase, GRINDAMYL™ EXEL 16.

Lipids extracted from the dough were analysed for free fatty acids and polar lipids as described above. The results of these analyses are summarised in Tables 3.2 and 3.3:

Table 3.2

| Content of free fatty acids in doughs containing an emulsifier, Lipase SP 972 alone or in combination with lecithin, or GRINDAMYL™ EXEL 26 alone or in combination with lecithin | |
|---|---|
| | Free fatty acids, wt% |
| 0.2% Panodan A 2020 | 0.129 |
| 750 LUT/kg SP 972 | 0.148 |
| 1500 LUT/kg SP 972 | 0.235 |
| 750 LUT/kg SP 972 + 0.5% lecithin | 0.269 |
| 1500 LUT/kg SP 972 + 0.5% lecithin | 0.280 |
| 900 LUT/kg EXEL 16 | 0.263 |
| 1800 LUT/kg EXEL 16 | 0.330 |
| 900 LUT/kg EXEL 16 + 0.5% lecithin | 0.337 |
| 1800 LUT/kg EXEL 16 + 0.5% lecithin | 0.346 |

Table 3.3

| The content of polar lipids (wt%) in doughs supplemented with Lipase 972 alone or in combination with lecithin or GRINDAMYL™ EXEL 16 alone or in combination with lecithin | | | | |
|---|---|---|---|---|
| | DGDG | DGMG | PC | LPC |
| 750 LUT/kg SP 972 | 0.089 | 0.083 | 0.023 | 0.303 |
| 750 LUT/kg SP 972 + 0.5% lecithin | 0.116 | 0.076 | 0.031 | 0.326 |
| 900 LUT/kg EXEL 16 | 0.233 | 0.018 | 0.067 | 0.285 |
| 900 LUT/kg EXEL 16 + 0.5% lecithin | 0.240 | 0.015 | 0.015 | 0.290 |

The above results indicate that GRINDAMYL™ EXEL 16 has no effect on hydrolysis of DGDG and PC. It can therefore be concluded that modification of both phospholipids and glycolipids in the dough effected by Lipase SP 972 is of importance for the bread improving effect of Lipase 972 as compared to the commercial lipase, GRINDAMYL™ EXEL 16.

EXAMPLE 4

**The enzymatic activity of Lipase SP 972 in a dough supplemented with oat lipid**

Lipase SP 972 was tested in a model dough supplemented with an oat lipid fraction, 2133-18-1. The recipe of the dough was as follows:

Table 4.1

| Composition of doughs supplemented with oat lipid | | | | |
|---|---|---|---|---|
| Dough component | Dough No. 1 | Dough No. 2 | Dough No. 3 | Dough No. 4 |
| Reform wheat flour, g | 10 | 10 | 10 | 10 |
| 30% NaCl, g | 0.5 | 0.5 | 0.5 | 0.5 |
| Oat lipid, 2133-18-1, g | 0.25 | 0.25 | 0.25 | 0.25 |
| Water (500 BU) (53.7%), ml | 4.87 | 4.87 | 4.87 | 4.87 |
| SP 972, LUT/kg flour | 0 | 500 | 1000 | 5000 |

The dough was mixed at 30°C using a 50 g Brabender Farinograph. After 60 min. fermentation, the dough was frozen and freeze-dried followed by extracting lipids from the freeze-dried dough and analysing for polar lipids using HPLC. The results are summarised in Table 4.2:

Table 4.2

| Content of polar lipids in doughs supplemented with oat lipids. Values are wt% of freeze-dried dough | | | | |
|---|---|---|---|---|
| Polar lipid component | Dough No. 1 (control) | Dough No. 2 | Dough No. 3 | Dough No. 4 |
| DGDG | 0.751 | 0.633 | 0.504 | 0.221 |
| PC | 0.301 | 0.209 | 0.159 | 0.055 |
| DGMG | 0.032 | 0.094 | 0.112 | 0.233 |
| LPC | 0.276 | 0.342 | 0.342 | 0.409 |

It appears from the above results that addition of oat lipid results in an enhanced level of both phospholipids and glycolipids and that the SP 972 lipase to a large extent utilises DGDG and PC as substrates. Accordingly, the addition of the enzyme has a significant effect in the doughs in respect of formation of more polar lipid components.

EXAMPLE 5

**Baking experiments to evaluate the possible synergistic effect of adding a cereal lipid and Lipase SP 979 to doughs**

Baking experiments were carried out in which the effect of a fractionated oat lipid preparation (2133-100-1) alone and in combination with Lipase SP 979 or GRINDAMYL™ EXEL 16 on bread quality was studied to assess whether a synergistic effect of oat lipid and lipases could be demonstrated. The procedure for making the dough and baking the dough was as described above for "mini baking test". The amount of additives used and the results in respect of bread quality are summarised in Table 5.1:

Table 5.1

| The effect on bread quality of oat lipid and lipases | | |
|---|---|---|
| Additives | Specific volume, ml/g | Relative volume |
| Control w/o additives | 4.01 | 100 |
| Oat lipid, 0.3% | 3.91 | 98 |
| Oat lipid, 0.3% + 1010 ppm SP 979 | 5.75 | 143 |
| Oat lipid, 0.3% + 200 ppm EXEL 16 | 4.70 | 117 |

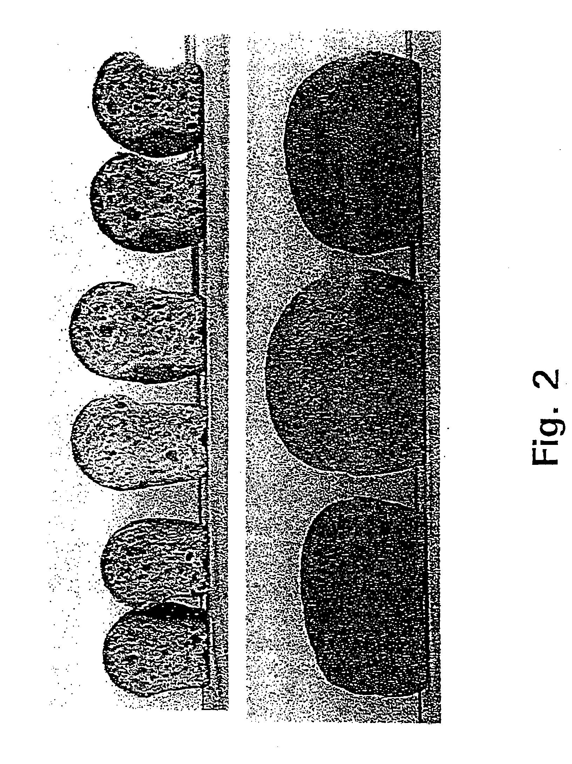

These baking experiments indicate a very strong volume effect by the combination of oat lipid and Lipase SP 979. The oat lipid fraction alone did not have any improving effect on bread volume. It was also very clear that the commercial lipase GRINDAMYL™ EXEL 16 although it showed a slight volume improvement effect had significantly less bread volume improvement effect than the SP 979 lipase which relative to the control without additives gave a specific volume improvement of 43% and relative to the commercial lipase an improvement of about 22%.
In addition to the improved bread volume, the addition of Lipase SP 979 resulted in improved bread crumb structure and bread appearance. This is illustrated in Fig. 2 from which it appears that bread baked with SP 979 gave a nice and tender crumb structure and a significant oven spring.

EXAMPLE 6

**The effect of Lipase SP 972 alone and in combination with acylglycerols on dough quality and the quality of toast bread**

Lipase SP 972 was tested alone and in combination with soy oil in baking experiments with toast bread carried out as described above, and the effects on dough characteristics and bread quality was compared with those of GRINDAMYL™ EXEL 16 and DIMODAN™ SDM-T. The results on dough quality parameters and the bread quality of these experiments are summarised in the below tables:

Table 6.1

| The effect on dough extensibility and stickiness of Lipase SP 972, soy oil, shortening, GRINDAMYL™ EXEL 16 and the emulsifier, DIMODAN™ SDM-T alone and in combinations | | | | |
|---|---|---|---|---|
| | Dough score (0-10) after mixing | | Dough score (0-10) after moulding | |
| Additive | Extensibility | Stickiness | Extensibility | Stickiness |
| Control | 5 | 5 | 5 | 5 |
| 2% shortening | 5 | 5 | 6 | 5 |
| 2% shortening + 500 LUT/kg SP 972 | 6 | 5 | 7 | 5 |
| 500 LUT/kg SP 972 | 6 | 5 | 6 | 5 |
| 1% soy oil | 6 | 5 | 6 | 5 |
| 1% soy oil + 500 LUT/kg SP 972 | 6 | 5 | 7 | 5 |

Table 6.1   (continued)

| The effect on dough extensibility and stickiness of Lipase SP 972, soy oil, shortening, GRINDAMYL™ EXEL 16 and the emulsifier, DIMODAN™ SDM-T alone and in combinations | | | | |
|---|---|---|---|---|
| | Dough score (0-10) after mixing | | Dough score (0-10) after moulding | |
| Additive | Extensibility | Stickiness | Extensibility | Stickiness |
| 1000 LUT/kg SP 972 | 6 | 5 | 7 | 4 |
| 1% soy oil + 1000 LUT/kg SP 972 | 6 | 5 | 7 | 4 |
| 0.4% DIMODAN™ SDM-T | 6 | 5 | 6 | 5 |
| 200 ppm EXEL 16 | 6 | 5 | 7 | 5 |
| 2% shortening + 200 ppm EXEL 16 | 6 | 5 | 7 | 4 |
| 1% soy oil + 200 ppm EXEL 16 | 6 | 5 | 7 | 4 |

Table 6.2

| The effect on specific volume, crumb quality and softness of Lipase SP 972, soy oil, shortening, GRINDAMYL™ EXEL 16 and the emulsifier, DIMODAN™ SDM-T alone and in combinations | | | | |
|---|---|---|---|---|
| Additive | Specific volume | Crumb score (0-10) | Softness, day 3 | Softness, day 7 |
| Control | 3.72 | 4 | 82 | 129 |
| 2% shortening | 3.98 | 7 | 57 | 91 |
| 2% shortening + 500 LUT/kg SP 972 | 4.63 | 3 | 48 | 69 |
| 500 LUT/kg SP 972 | 4.26 | 7 | 45 | 75 |
| 1% soy oil | 4.05 | 1 | 63 | 96 |
| 1% soy oil + 500 LUT/kg SP 972 | 4.65 | 5 | 48 | 77 |
| 1000 LUT/kg SP 972 | 4.01 | 7 | 44 | 70 |
| 1% soy oil + 1000 LUT/kg SP 972 | 3.29 | 10 | 100 | 135 |
| 0.4% DIMODAN™ SDM-T | 4.17 | 7 | 58 | 89 |
| 200 ppm EXEL 16 | 3.25 | 7 | 108 | 146 |
| 2% shortening + 200 ppm EXEL 16 | 3.87 | 6 | 55 | 86 |
| 1% soy oil + 200 ppm EXEL 16 | 4.12 | 4 | 73 | 104 |

These baking experiments confirmed that the addition of Lipase SP 972 alone and in combination with acylglycerol lipids resulted in a significant improvement of bread volume and softness and this effect was clearly better than that of the commercial lipase. GRINDAMYL™ EXEL 16. Additionally, as it appears from the above tables, the addition of Lipase SP 972 gave improved dough extensibility and crumb score. It is also evident from the above results that SP 972 gave very positive effects in combination with both soy oil and shortening.

In contrast to the effect of Lipase SP 972, the addition of GRINDAMYL™ EXEL 16 did not result in improvement of bread softness.

EXAMPLE 7

**The effect on dough characteristics and bread quality of Lipase SP 979**

Lipase SP 979 which has relatively low activity on short chain triglycerides but is particularly active towards glycerides with long chain fatty acids (see section 12 above), and towards phospholipids was tested in toast bread baking experiments. The procedure for making the toast bread was as described above, but with the addition of additives as indicated in the following Table 7.1 which summarises the results of the experiments in respect of dough and bread quality.

Table 7.1

| The effect of Lipase SP 972 alone and in combination with lecithin or soy oil on dough and bread quality | | | | | | | |
|---|---|---|---|---|---|---|---|
| | Dough score after moulding | | Specific volum e | Crumb score | Softness day 1 | Softness day 3 | Softness day 7 |
| | Extensibility | Stickiness | | | | | |
| Control | 5 | 5 | 4.4 | 3 | 37 | 69 | 103 |
| 500 PLU/ kg SP 979 | 6 | 5 | 4.27 | 8 | 32 | 59 | 90 |
| 1000 PLU/ kg SP 979 | 6 | 5 | 5.19 | 8 | 20 | 42 | 61 |
| 2000 PLU/ kg SP 979 | 6 | 5 | 4.84 | 7 | 21 | 39 | 67 |
| 0.5% lecithin | 6 | 5 | 4.82 | 6 | 25 | 52 | 76 |
| 500 PLU/ kg SP 979 + 0.5% lecithin | 6 | 5 | 4.43 | 8 | 31 | 58 | 87 |
| 1000 PLU/ kg SP 979 + 0.5% lecithin | 6 | 5 | 5.21 | 6 | 19 | 38 | 60 |
| 2000 PLU/ kg SP 979 + 0.5% lecithin | 6 | 5 | 4.88 | 8 | 20 | 38 | 59 |
| 500 PLU/ kg SP 979 + 1% soy oil | 6 | 5 | 4.8 | 8 | 24 | 38 | 69 |
| 1000 PLU/ kg SP 979 + 1% soy oil | 6 | 5 | 4.91 | 9 | 24 | 41 | 67 |
| 2000 PLU/ kg SP 979 + 1% soy oil | 6 | 5 | 4.33 | 6 | 34 | 56 | 86 |

Table 7.1   (continued)

| The effect of Lipase SP 972 alone and in combination with lecithin or soy oil on dough and bread quality | | | | | | | |
|---|---|---|---|---|---|---|---|
| | Dough score after moulding | | Specific volum e | Crumb score | Softness day 1 | Softness day 3 | Softness day 7 |
| | Extensibility | Stickiness | | | | | |
| 0.4% DIMODAN SDM-T | 6 | 5 | 4.44 | 8 | 31 | 55 | 86 |

These baking experiments show a very interesting effect of Lipase SP 979 in terms of improved bread volume and crumb structure. This effect is significantly better than that of the commercial emulsifier, DIMODAN™ SDM-T.

Even more interesting, however, is the effect of this enzyme on bread softness which clearly indicates that Lipase SP 979 both alone and in combination with acylglycerols and phospholipids has a significant softness improving effect. It was observed that the crumb of the bread made in this experiment with addition of SP 979 was moist and that the crumb structure of such bread was very homogeneous and had a bite which was shorter than that of the control bread without additives.

EXAMPLE 8

**The effect of Lipase SP 979 alone and in combination with oat lipid on bread quality**

Mini bread baking experiments were carried out according to the procedures described above, but with the additions of additives as indicated in the below Table 8.1 in which the effects on specific volume and formation of free fatty acids (analysed colourimetrically) in the doughs are summarised:

Table 8.1

| The effect of Lipase 979 on bread volume and formation of free fatty acids | | |
|---|---|---|
| | Specific volume | wt% free fatty acids |
| Control | 3.53 | 0.241 |
| 0.3% oat lipid 2133-100-1 | 3.72 | 0.243 |
| 0.3% oat lipid + 1010 ppm SP 979 | 5.45 | 0.416 |
| 0.3% oat lipid + 200 ppm EXEL 16 | 4.5 | 0.377 |
| 1010 ppm SP 979 | 4.84 | 0.338 |
| 200 ppm EXEL 16 | 4.08 | 0.317 |

The above results demonstrate a significant dough strengthening effect of Lipase SP 979 as reflected in enhanced specific volume and crumb structure and appearance. The effect of SP 979 was even more pronounced when it is combined with oat oil.

Proofed doughs from this baking test were freeze-dried and lipids extracted and subjected to HPLC analysis. The results of this analysis are shown in Table 8.2:

Table 8.2

| The effect of Lipase SP 979 on the hydrolysis of glycolipids and phospholipids in dough (values are in wt%) | | | | |
|---|---|---|---|---|
| | DGDG | MGDG | PC | LPC |
| Control | 0.176 | 0.033 | 0.025 | 0.193 |
| 0.3% oat lipid 2133-100-1 | 0.190 | 0.031 | 0.036 | 0.224 |
| 0.3% oat lipid + 1010 ppm SP 979 | 0.089 | 0.020 | 0.006 | 0.228 |
| 0.3% oat lipid + 200 ppm EXEL 16 | 0.188 | 0.031 | 0.038 | 0.197 |
| 1010 ppm SP 979 | 0.061 | 0.018 | 0.007 | 0.114 |

Table 8.2   (continued)

| The effect of Lipase SP 979 on the hydrolysis of glycolipids and phospholipids in dough (values are in wt%) | | | | |
|---|---|---|---|---|
| | DGDG | MGDG | PC | LPC |
| 200 ppm EXEL 16 | 0.203 | 0.039 | 0.032 | 0.229 |

It appears from these results that Lipase SP 979 is capable of hydrolysing both glycolipids (DGDG) and phospholipids (PC). In fact more than 50% of DGDG and PC present is hydrolysed by the addition of SP 979.

EXAMPLE 9

**Dough and bread quality improving effects of Lipase SP 972 and Lipase SP 979 in comparison with the commercial lipases, GRINDAMYL™ EXEL 16 and Stalingase™**

The lipid hydrolysing effects of Lipase SP 972 and Lipase SP 979 were compared with those of two commercial lipases, GRINDAMYL™ EXEL 16 and Stalingase™ (Gist-brocades) (the latter enzyme is also referred to as # 1867) in a model dough system. Doughs were kept for 1 hour at 32°C and freeze-dried and polar lipids analysed by HPLC and nonpolar lipids by GLC analyses.

The model doughs had the following compositions:

Table 9.1

| Composition of model doughs | | | | | |
|---|---|---|---|---|---|
| | Dough No.1 | Dough No.2 | Dough No.3 | Dough No.4 | Dough No.5 |
| Flour, Reform, g | 50 | 50 | 50 | 50 | 50 |
| 30% NaCl, g | 2.5 | 2.5 | 2.5 | 2.5 | 2.5 |
| Water, 500 BU, 53.7%, ml | 24.35 | 24.35 | 24.35 | 24.35 | 24.35 |
| SP 972, LUT/kg flour | | 2000 | | | |
| SP 979, PLU/kg flour | | | 1000 | | |
| EXEL 16, ppm | | | | 200 | |
| Stalingase™ , ppm | | | | | 200 |

The content of free fatty acids and triglycerides (GLC analysis) and the polar lipids, DGDG and PC (HPLC analysis) in the doughs are summarised in Table 9.2:

Table 9.2

| Content of free fatty acids, triglycerides and polar lipids in model doughs (values are in wt% | | | | |
|---|---|---|---|---|
| | Free fatty acids | Triglycerides | DGDG | PC |
| Control | 0.188 | 0.378 | 0.204 | 0.023 |
| 2000 LUT SP 972 | 0.419 | 0.251 | 0.026 | 0.002 |
| 1000 PLU SP 979 | 0.285 | 0.359 | 0.153 | 0.009 |
| 200 ppm EXEL 16 | 0.257 | 0.321 | 0.224 | 0.022 |
| 200 ppm Stalingase™ | 0.285 | 0.276 | 0.217 | 0.024 |

Based on these values it is possible to calculate the amount of free fatty acid (FFA) formed in the dough and the amounts of triglycerides, DGDG and PC, respectively that are hydrolysed in the doughs. These data are shown in Table 9.3:

Table 9.3

| Formation of free fatty acids and hydrolysis of triglycerides, DGDG and PC in model doughs (wt%) | | | | |
|---|---|---|---|---|
| | FFA formed | DGDG hydrolysed | PC hydrolysed | Triglycerides hydrolysed |
| Control | 0 | 0 | 0 | 0 |
| 2000 LUT SP 972 | 0.230 | 0.178 | 0.021 | 0.127 |
| 1000 PLU SP 979 | 0.097 | 0.051 | 0.014 | 0.019 |
| 200 ppm EXEL 16 | 0.069 | -0.020 | 0.001 | 0.057 |
| 200 ppm Stalingase™ | 0.097 | -0.013 | -0.001 | 0.102 |

When the activity of a lipase in a dough is expressed in terms of the amount of FFA formed in the dough as shown in the above table, it is clearly demonstrated that Lipase SP 972 and Lipase SP 979 are very active in respect of hydrolysis of both glycolipids (DGDG) and phospholipids (PC) as compared to both of the commercial lipases tested, which show no effect at all on these substrates.

With respect to effect on triglycerides, Lipase SP 972 and Lipase SP 979 are both active, however to a less extent than the tested commercial lipases.

Accordingly, these results confirm that the two lipases according to the invention hydrolyse a wide range of lipid substrates including nonpolar lipids such as triglycerides and polar lipids such as the glycolipid, DGDG, and the phospholipid, PC.

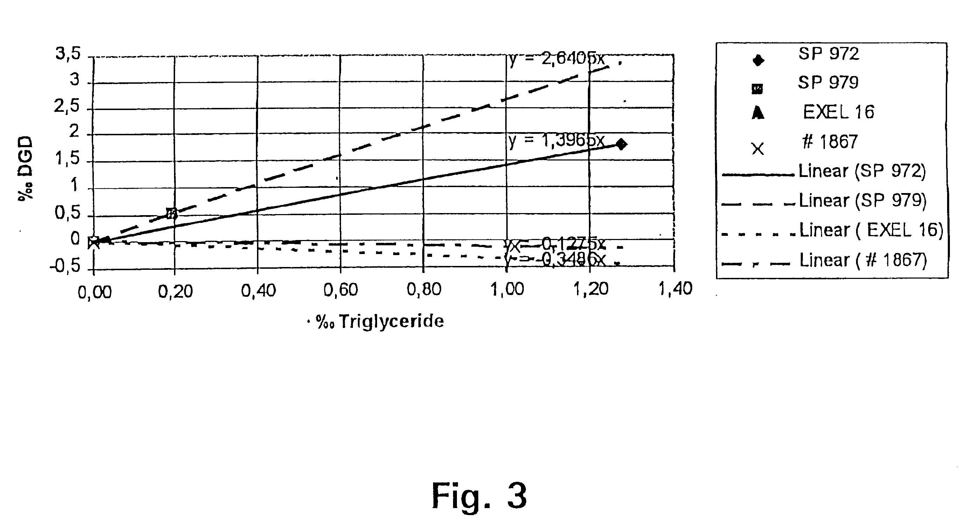

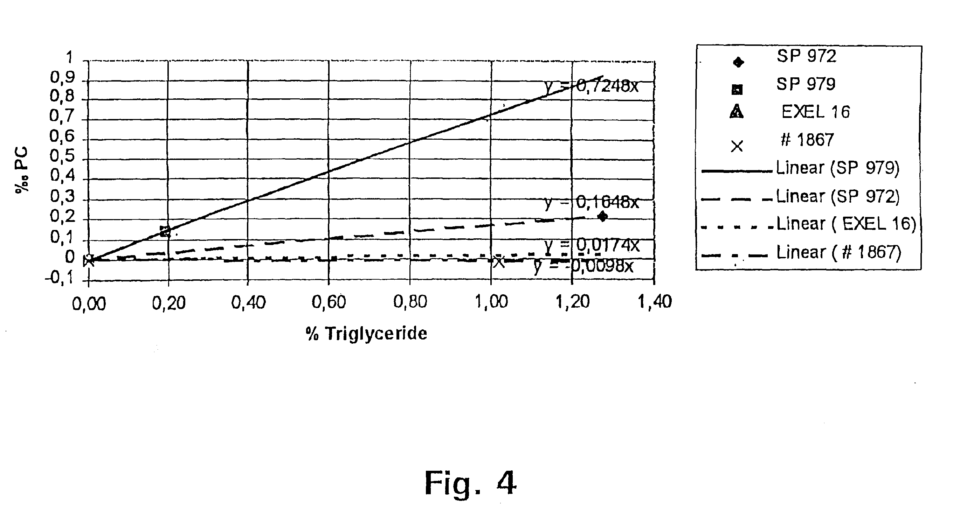

The data summarised in Table 9.3 may also be illustrated graphically to show the relationship between the ability of enzymes to hydrolyse triglycerides and the ability to hydrolyse glycolipids (Fig. 3) and the relationship between the ability of enzymes to hydrolyse triglycerides and the ability to hydrolyse phospholipids (Fig. 4). It appears from these figures that this relationship for Lipase SP 972 and Lipase SP 979, respectively in respect of DGDG can be described as a curve having slopes of 1.3965 and 2.6405, respectively and the corresponding values in respect of PC are 0.1648 and 0.7248, respectively.

These data clearly illustrate the relatively high activity of Lipase SP 972 and Lipase SP 979 on glycolipids and phospholipids in relation to their effect on triglycerides.

EXAMPLE 10

**Effect of Lipase SP979 and SP972 on different fatty acids**

The activity of SP979 and SP972 lipases on different fatty acids was evaluated by making a test dough containing butter fat. A commercial lipase product GRINDAMYL™ EXEL 16 was tested for comparison.

Test doughs were made according to the recipes outlined in Table 10.1:

Table 10.1

| Composition of test doughs with butter fat | | | | |
|---|---|---|---|---|
| | 1 | 2 | 3 | 4 |
| Flour, Reform 2000063, g | 10 | 10 | 10 | 10 |
| Dry yeast, g | 0.1 | 0.1 | 0.1 | 0.1 |
| Salt, g | 0.15 | 0.15 | 0.15 | 0.15 |
| Sugar, g | 0.15 | 0.15 | 0.15 | 0.15 |
| Butter, Lurpak, g | 0.1 | 0.1 | 0.1 | 0.1 |
| Water 500 BU +7%, ml | 6 | 6 | 6 | 6 |
| Ascorbic acid, 0.1% solution, ml | 0.4 | 0.4 | 0.4 | 0.4 |
| GRINDAMYLEXEL 16, ppm | | 400 | | |
| SP972, LIPU/kg flour | | | 200 | |
| SP979, PLU/kg flour | | | | 1000 |

The four test doughs (1-4) were mixed using a 50g Brabender™ mixing bowl and proofed (as detailed in the section entitled "8. Mini baking test" above). After proofing the doughs were frozen and freeze dried. The total lipids in the doughs were extracted with water saturated butanol. Free fatty acids in the dough lipids were isolated on a Bond Elut-NH2 column and the free fatty acid composition was analysed by GLC as fatty acid methyl esters (see Table 10.2). The total amount of free fatty acids in the dough lipids (%, calculated on dough dry weight) was analysed by spectrophotometric method as Cu-salts (see also Table 10.2)

Table 10.2

| Free fatty acid in the dough, and the fatty acid composition of the free fatty acid. | | | | |
|---|---|---|---|---|
| | 1 | 2 | 3 | 4 |
| | Control | Gr. Exel 16 | SP972 | SP979 |
| Free fatty acid in the dough | 0.0925% | 0.252% | 0.290% | 0.192% |
| Fatty acid | | | | |
| Composition, % | | | | |
| C6 | | 0.1 | 0.1 | 0.1 |
| C8 | | 0.2 | 0.1 | 0.1 |
| C10 | 0.3 | 0.7 | 0.4 | 0.3 |
| C12 | 1.5 | 1.5 | 0.9 | 0.9 |
| C14 | 0.9 | 3.1 | 2.3 | 1 |
| C15 | 0.4 | 0.7 | 0.6 | 0.3 |
| C16 | 38.1 | 35.8 | 36.4 | 36.4 |
| C16:1 | 1.4 | 0.9 | 0.7 | 0.6 |
| C17 | 0.4 | 0.7 | 0.6 | 0.4 |
| C18 | 9.3 | 8.6 | 7.8 | 6.2 |
| C18:1 | 20.1 | 18.9 | 15.5 | 12.9 |
| C18:2 | 24.6 | 26 | 32.3 | 38.2 |
| C18:3 | 1.4 | 1.6 | 1.4 | 1.5 |
| C20 | 0.5 | 0.3 | 0.3 | 0.3 |
| C20:1 | 1.4 | 0.9 | 0.7 | 0.8 |

Based on the amount of free fatty acid and the fatty acid composition, it is possible to calculate the amount of free fatty acid produced in dough containing lipase relative to the control dough without lipase addition (see Table 10.3).

For example, the amount of C16 (palmetic) fatty acid produced in dough number 2 containing lipase GRINDAMYL EXEL 16 compared to dough number 1 without lipase addition is calculated as follows:

$$\frac{0.252 \times 35.8}{100} \cdot \frac{0.0925 \times 38.1}{100} = 0.05497\%$$

$$0.05497\% = 549.7 \text{ ppm}$$

$$\frac{549.7 \text{ ppm}}{\text{mwt of fatty acid (i.e. 256.4)}} = 2.144 \text{ mmol per kg dry dough}$$

Based on this information it is possible to calculate the amount of short chain fatty acids (carbon number $\leq$ 10) relative to the amount of long chain fatty acids (carbon number $\geq$ 12) produced in the dough (see Table 10.3).

Table 10. 3

| mmol of Fatty acid/kg dry dough and relative activity on short chain fatty acids | | | |
|---|---|---|---|
| | Millimol Fatty acid/kg dry dough | | |
| | 2 | 3 | 4 |
| | Gr. Exel 16 | SP972 | SP979 |
| C6 | 0.022 | 0.025 | 0.017 |
| C8 | 0.035 | 0.020 | 0.013 |
| C10 | 0.086 | 0.051 | 0.017 |
| C12 | 0.119 | 0.061 | 0.017 |
| C14 | 0.306 | 0.256 | 0.048 |
| C15 | 0.058 | 0.057 | 0.008 |
| C16 | 2.144 | 2.742 | 1.351 |
| C16:1 | 0.038 | 0.029 | 0.000 |
| C17 | 0.052 | 0.051 | 0.015 |
| C18 | 0.459 | 0.493 | 0.116 |
| C18:1 | 1.028 | 0.933 | 0.219 |
| C18:2 | 1.525 | 2.529 | 1.804 |
| C18:3 | 0.098 | 0.099 | 0.057 |
| C20 | 0.009 | 0.013 | 0.004 |
| C20:1 | 0.031 | 0.024 | 0.008 |
| Molar ratio of short/long chain fatty acid | 2.44 | 1.32 | 1.29 |

From the results presented in Table 10.3 it is clear that different lipases had a different activity towards different fatty acids in the same substrate, and it is shown that the lipases SP 972 and SP 979 have low activity towards the short chain fatty acids as compared with Grindamyl EXEL 16.

EXAMPLE 11

**The activity of a commercially available Lipase towards polar lipids.**

The activity of a commercially available lipase available from Fluka Chemie AG, Switzerland designated as catalogue number 62299 was evaluated. This lipase was tested in a model dough system and was compared with a control dough having no lipase added.

Test doughs based on 10g flour were made according to the recipes outlined in Table 11.1:

Table 11.1

| Composition of test doughs | | |
|---|---|---|
| | 1 | 2 |
| Flour, DK Reform, g | 10 | 10 |
| Dry yeast, g | 0.1 | 0.1 |
| Salt | 0.15 | 0.15 |
| Water (500 BU=60%), ml | 6 | 6 |
| Fluka lipase 62299, mg | | 3.3 |

The doughs (1-2) were kneaded using a 50g Brabender™ mixing bowl for 5 minutes at 30°C and proofed for 45 minutes at 34°C. After proofing the doughs were frozen and freeze dried. The freeze dried doughs were extracted with water saturated butanol. The isolated dough lipids were then analysed for free fatty acids by a colourimetric method as Cu-salts and the dough lipids were also analysed by HPLC (see table 11.2).

Table 11.2

| HPLC analysis of dough lipids | | |
|---|---|---|
| HPLC analysis | Control, $\%_0$ | Fluka Lipase 62299 $\%_0$ |
| MGDG | 0.36 | 0.37 |
| MGMG | 0 | 0.07 |
| PA | 0.05 | 0 |
| APE | 0.2 | 0.15 |
| DGDG | 1.91 | 1.66 |
| PC | 0.42 | 0.19 |
| LPE | 0.2 | 0.19 |
| DGMG | 0 | 0.16 |
| LPC | 2.63 | 2.44 |
| Fatty Acid Analysis | 1.01 | 2.1 |

The results given in Table 11.2 show that Fluka lipase no. 62299 is active in a dough system during the formation of free fatty acids and that Fluka lipase no. 62299 is active towards both glycolipids (DGDG) and phospholipids (PC).

**SUMMARY**

The present invention will now be summarised by way of numbered paragraphs:

1. A method of preparing a flour dough, the method comprising adding to the dough components an enzyme that, under dough conditions, is capable of hydrolysing a nonpolar lipid, a glycolipid and a phospholipid, or a composition containing said enzyme, and mixing the dough components to obtain the dough.

2. A method according to paragraph 1 wherein at least one of the nonpolar lipid, the glycolipid and the phospholipid is a naturally occurring lipid component occurring in the flour used for the dough.

3. A method according to paragraph 2 wherein the naturally occurring lipid is a phospholipid.

4. A method according to paragraph 3 wherein the phospholipid is phosphatidylcholine (PC)

5. A method according to paragraph 2 wherein the naturally occurring lipid is a glycolipid.

6. A method according to paragraph 5 wherein the glycolipid is digalactosyldiglyceride (DGDG).

7. A method according to paragraph 1 wherein at least one of the nonpolar lipid, the glycolipid and the phospholipid is added to the dough.

8. A method according to paragraph 7 wherein the nonpolar lipid being added is an acylglycerol.

9. A method according to paragraph 8 wherein the acylglycerol being added is selected from the group consisting of a vegetable oil, a vegetable fat, an animal oil, an animal fat, shortening and butter.

10. A method according to paragraph 9 wherein the vegetable oil is a naturally occurring cereal oil including oat oil.

11. A method according to paragraph 7 wherein the polar lipid being added is a phospholipid selected from the group consisting of phosphatidylinositol (PI), phosphatidylglycerol (PG), phosphatidylcholine (PC) and phosphatidylethanolamine (PE).

12. A method according to paragraph 1 wherein the dough is a yeast leavened dough.

13. A method according to paragraph 1 wherein the enzyme is added in amount which is in the range of 10 to 100,000 LUT/kg flour or in the range of 10 to 100,000 PLU/kg flour.

14. A method according to paragraph 13 wherein the amount of enzyme is in the range of 100 to 10,000 LUT/kg flour or 100 to 10,000 PLU/kg flour.

15. A method according to paragraph 1 wherein the dough is a bread dough, the method comprising as a further step that the dough is baked to obtain a baked product.

16. A method according to paragraph 1 wherein the dough is a dough selected from the group consisting of a pasta dough, a noodle dough and a cake dough or batter.

17. A method according to paragraph 1 wherein the enzyme is added in an amount that results in an increase of the specific volume of the baked product that is at least 10%, relative to a baked product made under identical conditions except that the enzyme is not added.

18. A method according to paragraph 1 wherein a further enzyme is added to the dough.

19. A method according to paragraph 18 wherein the further enzyme is selected from the group consisting of a lipase, a starch degrading enzyme, a hemicellulase, a cellulase and an oxidoreductase.

20. A method according to paragraph 1 wherein at least 25% of DGDG initially present in the dough is hydrolysed.

21. A method according to paragraph 1 or 20 wherein at least 25% of PC initially present in the dough is hydrolysed.

22. A method according to paragraph 1 wherein the enzyme is characterised in that the relationship between the ability of the enzyme to hydrolyse triglycerides and the ability to hydrolyse glycolipids can be described as a curve having a slope which is at least 1.0.

23. A method according to paragraph 1 wherein the enzyme is characterised in that the relationship between the ability of the enzyme to hydrolyse triglycerides and the ability to hydrolyse phospholipids can be described as a curve having a slope which is at least 0.1.

24. A method according to any one of the preceding paragraphs wherein the nonpolar lipid is a triglyceride comprising a $C_4$ to $C_{10}$ fatty acid and a triglyceride comprising a $C_{12}$ to $C_{20}$ fatty acid, and wherein the enzyme preferentially hydrolyses said triglyceride comprising a $C_{12}$ to $C_{20}$ fatty acid as compared with a triglyceride comprising a $C_4$ to $C_{10}$ fatty acid.

25. A method of preparing a dough, said method comprising adding to the dough components an enzyme that, under dough conditions, is capable of hydrolysing a triglyceride comprising a $C_4$ to $C_{10}$ fatty acid, a triglyceride comprising a $C_{12}$ to $C_{20}$ fatty acid, a glycolipid and a phospholipid, and which enzyme preferentially hydrolyses said triglyceride comprising a $C_{12}$ to $C_{20}$ fatty acid as compared with a triglyceride comprising a $C_4$ to $C_{10}$ fatty acid, and mixing the dough components to obtain the dough.

26. A method according to paragraph 25 wherein said glycolipid is digalactosyl diglyceride.

27. A method of preparing a dough or a baked product prepared from a dough, comprising:

a) testing at least one enzyme for its hydrolytic activity towards a $C_4$ to $C_{10}$ fatty acid in a triglyceride, a $C_{12}$ to $C_{20}$ fatty acid fatty acid in a triglyceride, digalactosyl diglyceride and a phospholipid,
b) selecting an enzyme having hydrolytic activity towards digalactosyl diglyceride and the phospholipid, and having a greater activity towards the a $C_{12}$ to $C_{20}$ fatty acid as compared with a $C_4$ to $C_{10}$ fatty acid, and

c) adding the selected enzyme to the dough.

28. A dough improving composition comprising an enzyme that, under dough conditions, is capable of hydrolysing a nonpolar lipid, a glycolipid and a phospholipid, and optionally at least one further dough component.

29. A composition according to paragraph 28 that comprises a further enzyme selected from the group consisting of a lipase, a starch degrading enzyme, a hemicellulase, a cellulase and an oxidoreductase.

30. A composition according to paragraph 28 where the further dough component is selected from the group consisting of a cereal flour, yeast, a chemical leavening agent, a dough strengthening agent, an emulsifier, a sugar, an acylglycerol, a phospholipid, a glycolipid and a salt.

31. A method according to paragraph 1 wherein the enzyme is added in a composition according to any of paragraphs 28-30.

32. A dough obtained by the method of any of paragraphs 1-27 and 31.

33. A dough according to paragraph 32 which is frozen or packaged in a controlled atmosphere.

34. A baked product that is obtained by baking the dough of paragraph 32.

35. A noodle product made from the dough of paragraph 32.

36. A pasta product made from the dough of paragraph 32.

All publications mentioned in the above specification are herein incorporated by reference. Various modifications and variations of the described methods and systems of the invention will be apparent to those skilled in the art without departing from the scope and spirit of the invention. Although the invention has been described in connection with specific preferred embodiments, it should be understood that the invention as claimed should not be unduly limited to such specific embodiments. Indeed, various modifications of the described modes of carrying out the invention which are obvious to those skilled in molecular biology or related fields are intended to be within the scope of the following claims.

## Claims

1. A method of preparing a dough, said method comprising adding to the dough components an enzyme that, under dough conditions, is capable of hydrolysing a triglyceride comprising a $C_4$ to $C_{10}$ fatty acid, a triglyceride comprising a $C_{12}$ to $C_{20}$ fatty acid, a glycolipid and a phospholipid, and which enzyme preferentially hydrolyses said triglyceride comprising a $C_{12}$ to $C_{20}$ fatty acid as compared with a triglyceride comprising a $C_4$ to $C_{10}$ fatty acid, and mixing the dough components to obtain the dough.

2. A method according to claim 1 wherein said glycolipid is digalactosyl diglyceride.

3. A method of preparing a dough or a baked product prepared from a dough, comprising:

d) testing at least one enzyme for its hydrolytic activity towards a $C_4$ to $C_{10}$ fatty acid in a triglyceride, a $C_{12}$ to $C_{20}$ fatty acid fatty acid in a triglyceride, digalactosyl diglyceride and a phospholipid,
e) selecting an enzyme having hydrolytic activity towards digalactosyl diglyceride and the phospholipid, and having a greater activity towards the a $C_{12}$ to $C_{20}$ fatty acid as compared with a $C_4$ to $C_{10}$ fatty acid, and
f) adding the selected enzyme to the dough.

Fig. 1

Fig. 2

Fig. 3

Fig. 4

EP 1 108 360 A1

**European Patent Office**

## EUROPEAN SEARCH REPORT

Application Number

EP 00 31 0712

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | WO 00 32758 A (SHAMKANT ANANT PATKAR ;BORCH KIM (DK); PETRI ANDREAS (DK); VIND JE) 8 June 2000 (2000-06-08)<br>* page 14 *<br>* page 14, paragraphs 1-3; claims 57,64; examples 17,18,21 *<br>* claims 16,57,64; examples 17,18,21 * | 1-3 | A21D8/04 |

TECHNICAL FIELDS
SEARCHED (Int.Cl.7)

A21D

The present search report has been drawn up for all claims

| Place of search | Date of completion of the search | Examiner |
|---|---|---|
| THE HAGUE | 31 January 2001 | Rooney, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 00 31 0712

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2001

| Patent document cited in search report | Publication date | Patent family member(s) | Publication date |
|---|---|---|---|
| WO 0032758 A | 08-06-2000 | AU 1376300 A | 19-06-2000 |

EPO FORM P0459